# EUROPÄISCHE PATENTSCHRIFT

(11) **EP 2 850 022 B1**
(45) Veröffentlichungstag und Bekanntmachung des Hinweises auf die Patenterteilung: **06.07.2016**
(21) Anmeldenummer: 13723128.8
(22) Anmeldetag: 15.05.2013
(51) Int. Cl.: B65G 19/14, B65G 19/26, B65G 35/08

(54) **FÖRDEREINRICHTUNG, MITNEHMER UND ZUFUHREINRICHTUNG ZUR FÖRDERUNG VON SCHÜTTGUT**
TRANSPORT DEVICE, ACTUATOR AND TRACTION DEVICE FOR TRANSPORTING BULK GOODS
ENTRAÎNEUR, ÉLÉMENT DE TRACTION ET CONVOYEUR DESTINÉS AU TRANSPORT DE PRODUITS EN VRAC

(30) Priorität: 15.05.2012 EP 12168076
(43) Veröffentlichungstag der Anmeldung: 25.03.2015
(73) Patentinhaber: Bühler GmbH, 92339 Beilngries (DE)
(72) Erfinder: KAMPS, Rolf, CH-8873 Amden (SG) (CH)
(74) Vertreter: Vossius & Partner Patentanwälte Rechtsanwälte mbB
(86) Internationale Anmeldenummer: PCT/EP2013/060046
(87) Internationale Veröffentlichungsnummer: WO 2013/171265

(56) Entgegenhaltungen:
- EP-A1- 0 422 261
- WO-A1-99/21783
- WO-A1-2005/035404
- FR-A1- 2 634 470
- GB-A- 1 159 765
- NL-C2- 1 025 855

## Beschreibung

Die Erfindung betrifft eine Fördereinrichtung, einen Mitnehmer sowie ein Verfahren zur Aufrüstung und/oder Umrüstung einer Fördereinrichtung gemäss den Oberbegriffen der unabhängigen Ansprüche (siehe z.B. NL 1025855 C2).

Derartige Fördereinrichtungen, die geeignet sind zur Förderung von Schüttgut wie beispielsweise Reis oder Mehl entlang unter anderem gekrümmter Rohre von einem Einlass für das Schüttgut zu einem Auslass für das Schüttgut, sind aus dem Stand der Technik als Rohrkettenförderer bzw. Stauscheibenförderer bekannt.

Aus der US 4,197,938 ist ein Förderer für Schüttgut umfassend scheibenartige Mitnehmer bekannt. Die Mitnehmer sind an einem Seil angeordnet, wobei das Seil umfassend die Mitnehmer mittels eines Zahnrads antreibbar ist zur Förderung des Schüttguts unter anderem entlang gekrümmter Rohrabschnitte von einem Einlass zu einem Auslass.

Diese vorbekannte Fördereinrichtung für Schüttgut weist den Nachteil auf, dass beispielsweise bei einer Beschädigung der Mitnehmer im Betrieb deren Austausch aufwändig ist, was die Wartungskosten erhöht und den mittleren Durchsatz an Schüttgut durch die Fördereinrichtung verringert. Zudem ist bei der Verwendung eines Seils als Zugelement mit daran montierten Mitnehmern eine Längenanpassung beispielsweise bei Verkürzung oder Verlängerung der Fördereinrichtung aufwändig. Zudem weist die vorbekannte Fördereinrichtung den Nachteil auf, dass ein Füllgrad der Fördereinrichtung nicht einstellbar ist.

Aus der NL 1025855 ist eine Fördereinrichtung mit mehreren Mitnehmern bekannt, die ein elektrisch leitfähiges und/oder magnetisches Material enthalten.

Es ist daher eine Aufgabe der vorliegenden Erfindung, die Nachteile des Bekannten zu vermeiden, insbesondere also eine Fördereinrichtung, ein Mitnehmer und eine Zufuhreinrichtung sowie ein Verfahren bereitzustellen, mit denen ein zuverlässigerer Betrieb der Fördereinrichtung mit einem geringen Wartungsaufwand ermöglicht wird, wobei die Fördereinrichtung im Betrieb kostengünstig ist. Eine weitere Aufgabe ist die Bereitstellung einer Zufuhreinrichtung zur Ermöglichung der Einstellbarkeit eines Füllgrads der Fördereinrichtung. Eine zusätzliche Aufgabe der vorliegenden Erfindung ist die Bereitstellung eines Verfahrens zur Aufrüstung und/oder Umrüstung von bereits installierten Fördereinrichtungen, so dass diese im Betrieb einfach wartbar und kostengünstig sind.

Diese Aufgaben werden durch eine Fördereinrichtung, einen Mitnehmer, sowie Verfahren gemäss den unabhängigen Ansprüchen gelöst.

Die erfindungsgemässe Fördereinrichtung umfasst einen Förderkanal. Der Förderkanal ist insbesondere als ein Förderrohr ausgebildet. Im Förderkanal ist zumindest ein Mitnehmer angeordnet. Insbesondere sind zumindest zwei Mitnehmer im Förderkanal angeordnet. Die Fördereinrichtung weist zumindest einen Antrieb zum Antreiben des zumindest einen Mitnehmers zur Förderung von Schüttgut entlang einer Förderkanalachse auf. Der zumindest eine Mitnehmer ist zumindest abschnittsweise entlang der Förderkanalachse lose im Förderkanal angeordnet.

Unter einer "Fördereinrichtung" wird im Sinne der vorliegenden Anmeldung eine Einrichtung zur insbesondere kontinuierlichen Förderung von Schüttgut verstanden. Unter einer "kontinuierlichen Förderung" von Schüttgut wird im Sinne der vorliegenden Anmeldung insbesondere auch eine derartige Förderung von Schüttgut verstanden, bei der der Schüttgutstrom im Förderkanal abschnittsweise durch Mitnehmer unterbrochen ist.

Unter einem "Förderkanal" wird im Sinne der vorliegenden Anmeldung ein Kanal verstanden, entlang dessen Längsachse Schüttgut förderbar ist. Beispielsweise kann ein Förderkanal als offene Rinne oder als Hohlkörper mit kreisförmigem, dreieckigem, rechteckigem oder quadratischem Querschnitt oder beliebigen anderen Querschnittsformen ausgebildet sein. Insbesondere ist der Förderkanal als Förderrohr mit kreisförmigem Querschnitt senkrecht zur Längsachse des Förderrohrs ausgebildet. Weiter insbesondere ist der Förderkanal umlaufend als geschlossene Schleife ausgebildet.

Unter einer "Förderkanalachse" wird im Sinne der vorliegenden Anmeldung die Längsachse des Förderkanals verstanden, entlang der das Schüttgut bei bestimmungsgemässem Gebrauch gefördert wird.

Unter einem "Mitnehmer" wird im Sinne der vorliegenden Anmeldung ein derartiges Element verstanden, mit welchem bei bestimmungsgemässem Gebrauch im Wesentlichen parallel zur Längsachse des Förderkanals Schüttgut förderbar ist durch Positionieren des Mitnehmers entlang der Längsachse. Insbesondere ist der Mitnehmer in einem Hohlkörper wie beispielsweise einem Förderrohr anordenbar und entlang der Achse des Hohlkörpers positionierbar zur Förderung von Schüttgut entlang der Achse des Hohlkörpers.

Unter dem Begriff "Schüttgut" wird im Sinne der vorliegenden Anmeldung ein körniges, mehliges oder auch stückiges Gut verstanden, das in einer schüttfähigen Form vorliegt und insbesondere fliessfähig ist. Insbesondere werden als Schüttgut Reis, Mehl, Korn, fliessfähige, pulvrige Substanzen und beliebige Kombinationen daraus verstanden.

Unter einer "losen Anordnung eines Mitnehmers zumindest abschnittsweise entlang der Förderkanalachse" wird im Sinne der vorliegenden Anmeldung ein derartiger Mitnehmer verstanden, der in dem Abschnitt nicht mit einem Antrieb direkt verbunden ist; in dem Abschnitt wird ein derartiger Mitnehmer nur durch entlang der Förderkanalachse benachbart angeordnete Mitnehmer und/oder Schüttgut, welches gefördert wird, entlang der Förderkanalachse bewegt; beispielsweise wird in einem Antriebsabschnitt eine Kraft auf einen Mitnehmer im Wesentlichen parallel zur Förderkanalachse ausgeübt, wodurch der Mitnehmer und mit diesem in Kontakt stehendes Schüttgut im Wesentlichen parallel zur Förderkanalachse positioniert, wobei Mitnehmer und/oder Schüttgut ausserhalb des Antriebsabschnitts der Fördereinrichtung entlang der Förderkanalachse bewegt werden.

Unter der Bezeichnung "A und/oder B" werden im Sinne der vorliegenden Anmeldung die folgenden möglichen Kombinationen verstanden: A; B; A und B; A und kein B; B und kein A.

Die Ausgestaltung der Fördereinrichtung mit zumindest einem lose im Förderkanal angeordneten Mitnehmer hat den Vorteil, dass ein Austausch eines beispielsweise beschädigten Mitnehmers einfach erfolgen kann, da der Mitnehmer lose in dem Förderkanal angeordnet ist. Somit wird der Wartungsaufwand verringert und damit der Betrieb der Fördereinrichtung kosteneffizienter. Zudem ist vorteilhaft eine Anpassung an verschiedene Förderkanallängen durch Entnahme oder Hinzufügung eines Mitnehmers.

Insbesondere ist der Förderkanal in zumindest einer Seitenansicht S-förmig ausgebildet. Dies hat den Vorteil, dass eine Platz sparende Anordnung der Fördereinrichtung insbesondere auf lediglich einem Stockwerk ermöglicht wird; im Stand der Technik werden hierfür üblicherweise zwei oder drei Stockwerke benötigt, in denen die Fördereinrichtung angeordnet wird.

Der Förderkanal, insbesondere das Förderrohr, kann zumindest im Antriebsbereich Stahl enthalten oder daraus bestehen.

Bevorzugt ist der Förderkanal als Führungseinrichtung entlang der Förderkanalachse für den Mitnehmer ausgebildet.

Unter einer "Führungseinrichtung" wird im Sinne der vorliegenden Anmeldung eine Einrichtung zur Begrenzung der Bewegung des Mitnehmers im Wesentlichen senkrecht zur Förderkanalachse verstanden.

Diese Ausgestaltung des Förderkanals als Führungseinrichtung für den Mitnehmer hat den Vorteil, dass der Mitnehmer lediglich eine geringe Bewegung senkrecht zur Förderkanalachse durchführen kann, wodurch Beschädigungen des Mitnehmers im Betrieb minimiert werden.

Diese Ausbildung des Förderkanals als Führungseinrichtung kann beispielsweise dadurch erreicht werden, dass der mittlere Querschnitt des Förderkanals entlang der Förderkanalachse im Wesentlichen eine kongruente Form zum mittleren Querschnitt des Mitnehmers entlang der Förderkanalachse aufweist, so dass der Mitnehmer aber noch im Förderkanal einsetzbar ist und in einer Richtung seitlich zur Förderkanalachse wenig Spiel hat.

Besonders bevorzugt ist der Antrieb derart ausgebildet, dass zumindest abschnittsweise eine Kraft im Wesentlichen parallel zur Förderkanalachse durch den Antrieb direkt auf den Mitnehmer ausübbar ist. Der Mitnehmer kann hierfür mindestens eine Antriebsfläche aufweisen, auf den die genannte Kraft ausgeübt werden kann. Vorteilhafterweise ist die Antriebsfläche elastisch ausgebildet und kann beispielsweise aus Kunststoff oder Gummi bestehen oder damit beschichtet sein. Hierdurch kann erreicht werden, dass zwischen dem Antrieb und dem Mitnehmer nicht nur ein punktförmiger Kontakt besteht, sondern ein linienförmiger oder sogar ein flächenförmiger Kontakt. Ferner kann die Antriebsfläche Stahl enthalten oder daraus bestehen.

Unter der Formulierung, dass "eine Kraft direkt ausübbar ist", wird im Sinne der vorliegenden Anmeldung verstanden, dass die Kraft durch den Antrieb auf den entsprechenden Mitnehmer ausgeübt wird und nicht durch zwischen dem Antrieb und Mitnehmer weitere angeordnete Mitnehmer und/oder Schüttgut.

Diese Ausbildung des Antriebs hat den Vorteil, dass die Kraftübertragung auf den Mitnehmer zuverlässig erfolgen kann auch bei loser Anordnung der Mitnehmer.

Ganz besonders bevorzugt greift der Antrieb zumindest in einem Antriebsabschnitt in den Förderkanal ein zur Ausübung einer Kraft im Wesentlichen parallel zur Förderkanalachse auf einen im Antriebsabschnitt angeordneten Mitnehmer.

Dies hat den Vorteil, dass der Antrieb lediglich in einem Teilbereich der Vorrichtung angeordnet werden muss, was die Wartung der Fördereinrichtung erleichtert und die konstruktive Ausgestaltung der Fördereinrichtung vereinfacht.

Insbesondere ist die Gesamtlänge der im Förderkanal angeordneten Mitnehmer kleiner als die Länge der Förderkanalachse. Bevorzugt ist die Gesamtlänge der Mitnehmer grösser als die Länge der Förderkanalachse minus der Länge des zumindest einen Antriebsabschnitts.

Dies hat den Vorteil, dass der Antrieb der Mitnehmer im Förderkanal zuverlässig gewährbar ist.

Unter der "Gesamtlänge" der Mitnehmer wird die wirksame längste Ausdehnung eines Mitnehmers entlang der Förderkanalachse multipliziert mit der Anzahl der im Förderkanal angeordneten Mitnehmer verstanden. Falls die Mitnehmer verschieden ausgebildet sind, so wird unter der "Gesamtlänge" der Mitnehmer die Summe der wirksamen längsten Ausdehnungen der Mitnehmer entlang der Förderkanalachse verstanden.

Bevorzugt ist der Antrieb derart ausgebildet, dass eine Kraft im Wesentlichen im der Innenwand des Förderkanals zugewandten Umfangsbereich des Mitnehmers auf den Mitnehmer ausübbar ist.

Unter der Formulierung, dass "eine Kraft im Wesentlichen im Umfangsbereich des Mitnehmers ausübbar ist, der der Innenwand des Förderkanals zugewandt ist", wird im Sinne der vorliegenden Anmeldung verstanden, dass der Antrieb mit einer Antriebseinrichtung am Mitnehmer zur Kraftausübung angreift, wobei die Antriebseinrichtung einen Abschnitt in Umfangsrichtung des Mitnehmers direkt berührt.

Diese Ausgestaltung hat den Vorteil, dass der Antrieb nur im Bereich der Innenwand in den Förderkanal eingreifen muss, um die Antriebswirkung zu erreichen, wodurch Kollisionen des Antriebs mit anderen Teilen des Mitnehmers oder auch eine Kompression von Schüttgut minimiert werden.

Besonders bevorzugt ist der Antrieb aus der Liste der folgenden Antriebsarten oder beliebigen Kombinationen daraus auswählbar oder ausgewählt: Kettengetriebe, Riementriebe, Koppelgetriebe, Zahnradgetriebe, Schneckengetriebe, Magnetgetriebe. Das Koppelgetriebe kann beispielsweise als Viergelenkantrieb ausgebildet sein, insbesondere als Geradführungsgetriebe.

Derartige Antriebe sind dem Fachmann an sich bekannt. Vorteilhaft kann der am besten geeignete Antrieb gemäss den Anforderungen sowie beispielsweise den konstruktiven Randbedingungen ausgewählt werden.

Insbesondere wird ein Koppelgetriebe verwendet, das sich im Betrieb als besonders vorteilhaft erwiesen hat.

Insbesondere ist es bei Verwendung eines Magnetantriebs notwendig, das Material für den Mitnehmer entsprechend auszuwählen, so dass durch die durch den Magnetantrieb erzeugten magnetischen Wechselfelder ein Antrieb der Mitnehmer möglich ist.

In einer ersten bevorzugten Variante weist der Antrieb mindestens einen Mitnehmerbolzen auf, mittels dessen zumindest abschnittsweise eine Kraft im Wesentlichen parallel zur Förderkanalachse direkt auf den Mitnehmer ausübbar ist, insbesondere auf eine Antriebsfläche des Mitnehmers. Bevorzugt erstreckt sich der Mitnehmerbolzen zumindest während der Kraftausübung auf den Mitnehmer in einer vertikalen Richtung.

Vorteilhafterweise ist der Antrieb in dieser ersten Variante als Kettengetriebe ausgebildet und weist mindestens ein Antriebskettenpaar auf, wobei jedes von zwei gegenüberliegenden Enden des Mitnehmerbolzens an jeweils einer Antriebskette des Antriebskettenpaars befestigt ist. Im Falle sich vertikal erstreckender Mitnehmerbolzen weist der Antrieb dann mindestens eine untere Antriebskette und mindestens eine obere Antriebskette auf.

Der Antrieb kann nur ein einziges oder mehrere Antriebskettenpaare mit jeweiligen Mitnehmerbolzen aufweisen. In einigen Ausführungsformen der ersten Variante sind die Mitnehmerbolzen seitlich vom Förderkanal angeordnet. Bevorzugt sind die Mitnehmerbolzen eines ersten Antriebskettenpaares an einer ersten Seite des Förderkanals angeordnet, und die Mitnehmerbolzen eines zweiten Antriebskettenpaares sind an einer der ersten Seite gegenüber liegenden zweiten Seite des Förderkanals angeordnet. Auf diese Weise kann ein Verkeilen der Mitnehmer verhindert werden, während die Mitnehmerbolzen eine Kraft auf sie ausüben.

Ebenfalls bevorzugt ist der Abstand zweier benachbarter Mitnehmerbolzen im Wesentlichen identisch mit der Ausdehnung der Mitnehmer entlang der Förderkanalachse. Dies bedeutet, dass der Abstand zweier benachbarter Mitnehmerbolzen mindestens so gross ist wie die Ausdehnung der Mitnehmer entlang der Förderkanalachse und höchstens das 1,5-fache, bevorzugt höchstens das 1,25-fache und besonders bevorzugt höchstens das 1,1-fache dieser Ausdehnung beträgt. Hierdurch kann bewerkstelligt werden, dass die Mitnehmer während des Antreibens einander zumindest beinahe berühren und daher einen möglichst geringen Abstand aufweisen. Bevorzugt ist der Abstand zweier benachbarter Mitnehmerbolzen grösser als die Ausdehnung der Mitnehmer entlang der Förderkanalachse; insbesondere kann das Verhältnis dieser Grössen mindestens 1,01 sein. Auf diese Weise kann ein gewisses Spiel erreicht werden, um Fertigungstoleranzen bzw. Verschleisstoleranzen auszugleichen.

In einer zweiten bevorzugten Variante ist der Antrieb als Kettengetriebe oder Riementrieb ausgebildet und weist mindestens eine Antriebskette auf, die mindestens einen Mitnehmervorsprung enthält. Mittels dieses Mitnehmervorsprungs kann zumindest abschnittsweise eine Kraft im Wesentlichen parallel zur Förderkanalachse direkt auf den Mitnehmer ausübbar sein, insbesondere auf eine Antriebsfläche des Mitnehmers.

Auch in der zweiten Variante kann die Antriebskette seitlich vom Förderkanal angeordnet sein. Es können nur eine einzige oder auch mehrere Antriebsketten vorhanden sein. Beispielsweise kann eine erste Antriebskette mit Mitnehmervorsprüngen an einer ersten Seite des Förderkanals angeordnet sein, und eine zweite Antriebskette mit Mitnehmervorsprüngen kann an einer der ersten Seite gegenüberliegenden zweiten Seite des Förderkanals angeordnet sein. Auch hierdurch kann ein Verkeilen der Mitnehmer verhindert werden, während die Mitnehmerbolzen eine Kraft auf sie ausüben.

Ebenfalls bevorzugt ist der Abstand zweier benachbarter Mitnehmervorsprünge im Wesentlichen identisch mit der Ausdehnung der Mitnehmer entlang der Förderkanalachse. Dies bedeutet, dass der Abstand zweier benachbarter Mitnehmervorsprünge mindestens so gross ist wie die Ausdehnung der Mitnehmer entlang der Förderkanalachse und höchstens das 1,5-fache, bevorzugt höchstens das 1,25-fache und besonders bevorzugt höchstens das 1,1-fache dieser Ausdehnung beträgt. Hierdurch kann ebenso bewerkstelligt werden, dass die Mitnehmer während des Antreibens einander zumindest beinahe berühren und daher einen möglichen geringen Abstand aufweisen. Bevorzugt ist der Abstand zweier benachbarter Mitnehmervorsprünge grösser als die Ausdehnung der Mitnehmer entlang der Förderkanalachse; insbesondere kann das Verhältnis dieser Grössen mindestens 1,01 sein. Auf diese Weise kann ein gewisses Spiel erreicht werden, um Fertigungstoleranzen bzw. Verschleisstoleranzen auszugleichen.

In einer dritten bevorzugten Variante ist der Antrieb als Schneckengetriebe ausgebildet und weist mindestens eine drehbare Antriebsschnecke auf, mittels deren Drehebewegung zumindest abschnittsweise eine Kraft im Wesentlichen parallel zur Förderkanalachse direkt auf den Mitnehmer ausübbar ist, insbesondere auf eine Antriebsfläche des Mitnehmers. Hierfür ist es besonders bevorzugt, wenn sich die Drehachse der Antriebsschnecke im Wesentlichen parallel zur Förderkanalachse erstreckt.

Auch in dieser dritten Variante können nur eine einzige oder auch mehrere drehbare Antriebsschnecken vorhanden sein. Beispielsweise kann eine erste Antriebsschnecke auf einer ersten Seite des Förderkanals angeordnet sein, und eine zweite Förderschnecke kann an einer der ersten Seite gegenüberliegenden zweiten Seite des Förderkanals angeordnet sein.

Ebenfalls bevorzugt ist die Ausdehnung der Mitnehmer entlang der Förderkanalachse im Wesentlichen ein ganzzahliges Vielfaches der Ganghöhe der Antriebsschnecke. Dies bedeutet, dass das Verhältnis aus der Ausdehnung der Mitnehmer entlang der Förderkanalachse und der Ganghöhe der Antriebsschnecke höchstens um 0,4, bevorzugt höchstens um 0,2 und besonders bevorzugt höchstens um 0,1 kleiner ist als eine ganze Zahl, wobei diese ganze Zahl beispielsweise 1, 2, 3, 4, 5 oder 6 sein kann. Beispielsweise könnte also das genannte Verhältnis im Bereich von 3,6 bis 4, bevorzugt von 3,8 bis 4 und besonders bevorzugt von 3,9 bis 4 liegen. Auch hierdurch kann bewerkstelligt werden, dass die Mitnehmer während des Antreibens einander zumindest beinahe berühren und daher einen möglichst geringen Abstand aufweisen. Ebenfalls bevorzugt ist das genannte Verhältnis um mindestens 0,01 kleiner als die genannte ganze Zahl; auf diese Weise kann ein gewisses Spiel erreicht werden, um Fertigungstoleranzen bzw. Verschleisstoleranzen auszugleichen.

Im Falle mehrerer Antriebskettenpaare und/oder Antriebsketten und/oder Antriebsschnecken werden diese bevorzugt zueinander synchronisiert. Dies ist beispielsweise mit einem an sich bekannten Zahnradgetriebe möglich, über welches die Antriebskraft von einem Motor auf mehrere oder alle Antriebsketten und/oder Antriebsschnecken übertragbar ist. Durch eine solche Synchronisierung kann insbesondere gewährleistet werden, dass sich die oben beschriebenen Mitnehmerbolzen zumindest während der Kraftausübung auf den Mitnehmer in einer vertikalen Richtung erstrecken und dass sich mehrere Mitnehmerbolzen, Mitnehmervorsprünge oder Antriebsschnecken mit gleicher Geschwindigkeit bewegen.

Bevorzugt hat der Antriebsabschnitt in Richtung der Förderkanalachse eine Länge, welche mindestens das Doppelte, bevorzugt mindestens das Dreifache der Länge eines Mitnehmers beträgt. Hierdurch kann gewährleistet werden, dass sich zu jedem Zeitpunkt mindestens ein Mitnehmer vollständig im Antriebsabschnitt befindet.

An einer Innenwand des Förderkanals kann mindestens ein Leitelement vorhanden sein, und der Mitnehmer kann ein korrespondierendes Gegenleitelement aufweisen, mittels dessen der Mitnehmer entlang des Leitelements führbar ist. Hierdurch kann ein Verkippen oder Verkeilen des Mitnehmers verhindert werden. Das Leitelement kann beispielsweise als Seitenleitblech ausgebildet sein. Bevorzugt sind an der Innenwand des Förderkanals mindestens zwei und weiter bevorzugt genau zwei einander gegenüberliegende Seitenleitbleche angeordnet.

Wahlweise kann eine Zentrierung der Mitnehmer über die oben beschriebenen Mitnehmerbolzen erfolgen. Die oben beschriebene Antriebskette kann seitlich geführt werden und kann so seitliche Kräfte aufnehmen.

Ganz besonders bevorzugt ist eine Kraftübertragung zwischen zwei im Förderkanal parallel zur Förderkanalachse benachbart angeordneten Mitnehmern mittels direkten Kontakts zwischen den Mitnehmern erzielbar und/oder durch zwischen den Mitnehmern im Förderkanal angeordnetes Schüttgut.

Dies hat den Vorteil, dass die Anordnung eines Antriebs in einem Antriebsabschnitt ausreichend ist, was die Fördereinrichtung kostengünstiger und in der Wartung einfacher macht.

Ein weiterer Aspekt der vorliegenden Erfindung betrifft einen Mitnehmer zur Förderung von Schüttgut in einer Fördereinrichtung wie oben beschrieben. Der Mitnehmer umfasst eine Mitnehmerfläche und eine Ausrichtungseinrichtung zur zumindest abschnittsweisen Ausrichtung der mittleren Oberflächensenkrechten der Mitnehmerfläche im Wesentlichen parallel zur Förderkanalachse.

Unter einer "Mitnehmerfläche" des Mitnehmers wird im Sinne der vorliegenden Anmeldung diejenige Fläche verstanden, die im Wesentlichen die Förderung des Schüttguts in der Fördereinrichtung bei bestimmungsgemässem Gebrauch des Mitnehmers bewirkt.

Unter einer "Ausrichtungseinrichtung" wird eine derartige Einrichtung verstanden, mittels der die Mitnehmerfläche des Mitnehmers im Förderkanal so ausrichtbar ist, dass der Mitnehmer bei bestimmungsgemässem Gebrauch dazu geeignet ist, Schüttgut zu fördern. Beispielsweise kann dies durch eine entsprechende Dimensionierung als Zylinder, mittels am Umfang des Mitnehmers parallel zur Förderachse angeordneter Streben oder voneinander beabstandeter Scheiben, die mit einer Strebe verbunden sind, erzielt werden.

Unter der "mittleren Oberflächensenkrechten" der Mitnehmerfläche wird im Sinne der vorliegenden Anmeldung der Mittelwert der

Oberflächensenkrechten auf der wirksamen Mitnehmerfläche verstanden, die bei bestimmungsgemässem Gebrauch mit Schüttgut in Kontakt kommen kann.

Die Ausrichtung der Mitnehmerfläche mit einer Ausrichtungseinrichtung im Wesentlichen parallel zur Förderkanalachse hat den Vorteil, dass die Mitnehmerfläche im Betrieb eine gewünschte Position einnimmt und damit einen effizienten und kostengünstigen Betrieb ermöglicht. Da die Ausrichtungseinrichtung am Mitnehmer selbst angeordnet ist, ist beispielsweise bei Beschädigung des Mitnehmers ein einfacher Austausch möglich, da der Mitnehmer lose im Förderkanal anordenbar ist, was die Wartung vereinfacht.

Bevorzugt deckt bei Ausrichtung der mittleren Oberflächensenkrechten der Mitnehmerfläche im Wesentlichen parallel zur Förderkanalachse die Mitnehmerfläche den mittleren Förderkanalquerschnitt zu kleiner 100 % ab. Bevorzugt wird der mittlere Förderkanalquerschnitt im Bereich von 50 % bis 99,9 % und besonders bevorzugt von 80 % bis 99,9 % abgedeckt. Insbesondere kann eine Abdeckung im Bereich von 85 % bis 99,9 % liegen, optional im Bereich von 90 % bis 99,8 % und weiter optional von 92 % bis 97 %; insbesondere wird die Abdeckung in Abhängigkeit vom zu fördernden Schüttgut gewählt.

Unter dem "mittleren Förderkanalquerschnitt" wird im Sinne der vorliegenden Anmeldung der Mittelwert der Querschnittsflächen senkrecht zur Förderkanalachse verstanden, durch den bei bestimmungsgemässem Gebrauch Schüttgut gefördert wird.

Dies hat den Vorteil einer effizienten Förderung von Schüttgut entlang des Förderkanals, was den Betrieb kosteneffizient macht.

Besonders bevorzugt ist die Ausrichtungseinrichtung als zumindest ein erstes Flächenelement und ein zweites Flächenelement ausgebildet, die voneinander im Wesentlichen parallel zur Förderkanalachse beabstandet und miteinander wirkverbunden angeordnet sind, wobei die mittleren Oberflächensenkrechten der Flächenelemente im Wesentlichen parallel zur Förderkanalachse angeordnet sind.

Dies hat den Vorteil der einfachen konstruktiven Ausgestaltung des Mitnehmers. Weiter weist diese Ausgestaltung die oben zur Ausrichtungseinrichtung aufgeführten Vorteile auf.

Beispielsweise kann also der Mitnehmer aus zwei parallel zur Förderkanalachse voneinander beabstandeten kreisförmigen Scheiben ausgebildet sein, die mittels einer Strebe, die gegebenenfalls im Wesentlichen parallel zur Förderkanalachse angeordnet ist, miteinander verbunden sind.

Die Antriebsfläche des Mitnehmers kann an einer der beiden Flächenelemente angeordnet sein. Insbesondere kann die Mitnehmerfläche durch eine erste Seite einer der beiden kreisförmigen Scheiben gebildet sein, und die Antriebsfläche kann durch eine der ersten Seite gegenüberliegende zweite Seite dieser Scheibe gebildet sein.

Ganz besonders bevorzugt sind die vom Umfang des ersten Flächenelements und des zweiten Flächenelements umschlossenen Flächen bei einer Projektion parallel zu den mittleren Oberflächensenkrechten im Wesentlichen kongruent ausgebildet.

Unter der "vom Umfang umschlossenen Fläche" des ersten Flächenelements bzw. des zweiten Flächenelements wird im Sinne der vorliegenden Anmeldung verstanden, dass die äusseren Umhüllenden des ersten Flächenelements bzw. des zweiten Flächenelements bei Anordnung in einem Förderkanal im Wesentlichen kongruent aufeinander abbildbar sind; beispielsweise sind zwei parallel zueinander angeordnete vollflächige, kreisförmige Scheiben mit identischem Durchmesser mit parallel zueinander angeordneten Flächen im Wesentlichen kongruent ausgebildet; auch eine kreisförmige, vollflächige Scheibe ohne Öffnungen ist bei Anordnung in einem Förderrohr mit kreisförmigem Querschnitt im Wesentlichen kongruent zu einem Flächenelement umfassend radial angeordnete Streben mit Hohlräumen zwischen den Streben ausgebildet, wenn die Streben den gleichen Radius wie die kreisförmige, vollflächige Scheibe aufweisen.

Die Ausbildung des ersten Flächenelements und des zweiten Flächenelements im Wesentlichen kongruent zueinander hat den Vorteil, dass der Mitnehmer konstruktiv einfach ausgestaltbar ist, was die Wartung weiter vereinfacht und die Kosten für den Mitnehmer senkt.

Bevorzugt ist das der Förderrichtung des Schüttguts zugewandte erste Flächenelement des Mitnehmers für das Schüttgut durchlässig. Insbesondere umfasst das zweite Flächenelement die Mitnehmerfläche. Insbesondere ist das zweite Flächenelement auf der der Förderrichtung abgewandten Seite des Mitnehmers angeordnet.

Unter der "Förderrichtung" wird im Sinne der vorliegenden Anmeldung die Richtung verstanden, in der das Schüttgut im Mittel entlang des Förderkanals in der Fördereinrichtung gefördert wird, insbesondere in einem Abschnitt entlang des Förderkanals.

Unter dem Begriff "durchlässig" für ein Flächenelement wird im Sinne der vorliegenden Anmeldung eine Durchlässigkeit für das zu fördernde Schüttgut verstanden; beispielsweise kann eine Durchlässigkeit durch Anordnung von ausreichend grossen Öffnungen für das Schüttgut im ersten Flächenelement ausgestaltet sein.

Die Durchlässigkeit des ersten Flächenelements, welches beabstandet im Wesentlichen parallel zur Förderkanalachse zum zweiten Flächenelement angeordnet ist, hat den Vorteil, dass der Raum zwischen den Flächenelementen zur Förderung von Schüttgut verwendet werden kann, was den Durchsatz erhöht und damit effizienter im Hinblick auf die Kosten ist.

Besonders bevorzugt weist der Mitnehmer auf der der Förderrichtung zugewandten und/oder auf der der Förderrichtung abgewandten Seite einen Abstandshalter auf. Insbesondere ist der Abstandshalter ein im Wesentlichen parallel zur Förderkanalachse angeordneter Arm. Weiter insbesondere ist der Abstandshalter am vom Mitnehmer abgewandten Ende kugelförmig oder kalottenförmig ausgebildet.

Unter der Formulierung "kugelförmig oder kalottenförmig" wird im Sinne der vorliegenden Anmeldung verstanden, dass am dem Mitnehmer abgewandten Ende des Abstandshalters eine Kugel oder eine Kalotte angeordnet ist. Unter einer Kalotte wird ein abgeflachter Kugelschnitt verstanden.

Die Anordnung von zumindest einem Abstandshalter am Mitnehmer hat den Vorteil, dass ein Mindestabstand zur effizienten Förderung von Schüttgut im Förderkanal mit konstruktiv einfachen Mitteln erzielbar ist, was den Wartungsaufwand verringert und den Betrieb kostengünstig und effizient ausgestaltet. Die Anordnung eines kugelförmigen oder kalottenförmigen Abstandshalters hat den Vorteil, dass auch in gekrümmten Förderkanälen der Abstandshalter zuverlässig funktioniert und das Auftreten hoher Punktbelastungen minimiert wird, was den Verschleiss und damit den Wartungsaufwand reduziert.

Ganz besonders bevorzugt weist der Mitnehmer auf der der Förderrichtung zugewandten oder auf der der Förderrichtung abgewandten Seite eine Ausnehmung auf, die derart ausgebildet ist, dass der Abstandshalter in die Ausnehmung eingreifen kann. Insbesondere ist die Ausnehmung trichterförmig und weiter insbesondere zumindest abschnittsweise kugelförmig oder zumindest abschnittsweise parabelförmig ausgebildet.

Dies hat den Vorteil, dass ein Abstandshalter zuverlässig auch in gekrümmten Bereichen des Förderkanals in die Ausnehmung eingreifen kann, was den Betrieb zuverlässiger macht und den Verschleiss verringert für einen geringeren Wartungsaufwand.

Ein weiterer Aspekt der vorliegenden Erfindung betrifft eine Zufuhreinrichtung für Schüttgut in einen Einlass in eine Fördereinrichtung umfassend einen Förderkanal mit einer Innenwand. Insbesondere wird die Zufuhreinrichtung mit einer Fördereinrichtung wie vorstehend beschrieben verwendet und optional mit einem Mitnehmer wie vorstehend beschrieben. Das Schüttgut ist im Wesentlichen mittels Schwerkraft in die Fördereinrichtung förderbar. Insbesondere wird die Zufuhreinrichtung an einem im Wesentlichen horizontalen Abschnitt der Fördereinrichtung angeordnet. Der Einlass überstreicht einen Winkelbereich der Innenwand von grösser 0° bis kleiner 180° und/oder kleiner 0° bis grösser -180° bezogen auf die Schwerkraftrichtung. Bevorzugt ist der Winkelbereich grösser 20° bis kleiner 160° und/oder kleiner -20° bis grösser - 160°. Besonders bevorzugt ist der Winkelbereich grösser 45° bis kleiner 150° und/oder kleiner -45° bis grösser -150°.

Unter einem "Winkel bezogen auf die Schwerkraftrichtung" wird im Sinne der vorliegenden Anmeldung verstanden, dass die Schwerkraftrichtung einen Winkel von 0° definiert und ein positiver Winkel im Uhrzeigersinn zur Schwerkraftrichtung gemessen wird und ein negativer Winkel im Gegenuhrzeigersinn.

Ein "im Wesentlicher horizontaler Abschnitt" ist im Sinne der vorliegenden Anmeldung ein Abschnitt, der im Wesentlichen senkrecht zur Schwerkraftrichtung angeordnet ist.

Unter einem "Winkelbereich, der die Innenwand überstreicht" wird im Sinne der vorliegenden Anmeldung verstanden, dass der Einlass in die Fördereinrichtung einen Öffnungswinkel überstreicht, gemessen von der Förderkanalachse, d. h. dem Mittelpunkt des Förderkanals. Der Winkelbereich ist als mittlerer Winkelbereich aufzufassen.

Beispielsweise ist also der Einlass, wenn der Einlass in einem im Wesentlichen horizontalen Abschnitt der Fördereinrichtung angeordnet ist, seitlich angeordnet.

Die Anordnung des Einlasses im beanspruchten Winkelbereich hat den Vorteil, dass eine Füllhöhe bzw. ein Füllgrad im Förderkanal entsprechend den Anforderungen einstellbar ist. Der Winkelbereich kann vorteilhaft in Abhängigkeit vom verwendeten Schüttgut gewählt werden.

Beispielsweise kann der Winkelbereich fest eingestellt sein; dies hat den Vorteil, dass der Winkelbereich beispielsweise für ein zu förderndes Schüttgut auf einen optimalen Wert fixierbar ist, was den Betrieb der Fördereinrichtung zuverlässiger macht.

Bevorzugt ist der Winkelbereich einstellbar, insbesondere mittels eines Schiebers.

Beispielsweise kann der Schieber als Drehschieber und/oder als Drehmuffe am Förderkanal und/oder an der Zufuhreinrichtung angeordnet sein.

Die Einstellbarkeit des Winkelbereichs hat den Vorteil, dass in Abhängigkeit von den Anforderungen an die Schüttgutförderung sowie auch in Abhängigkeit vom zu fördernden Schüttgut der Winkelbereich einstellbar ist zur Einstellung des Füllgrads im Förderkanal.

Besonders bevorzugt umfasst die Zufuhreinrichtung einen Umlenkbereich zur Förderung des Schüttguts zum Einlass.

Dies hat den Vorteil, dass das Schüttgut, welches beispielsweise stromaufwärts in einem Vorratsbehälter gelagert ist, durch den Umlenkbereich zum Förderkanal förderbar ist, wobei durch den Umlenkbereich die Fördergeschwindigkeit bzw. Förderrate des Schüttguts in den Förderkanal einstellbar ist.

Unter einem "Umlenkbereich" wird im Sinne der vorliegenden Anmeldung ein Bereich verstanden, in dem eine Umlenkung des Schüttguts von einer Förderrichtung im Wesentlichen parallel zur Schwerkraftrichtung stattfindet.

Ganz besonders bevorzugt ist der Umlenkbereich als Umlenkfläche ausgebildet und in einem Umlenkwinkel bezogen auf die Schwerkraftrichtung im Bereich von 30° bis 70° angeordnet.

Bevorzugt ist der Umlenkwinkel im Bereich von 40° bis 60°, besonders bevorzugt von 45° bis 55° angeordnet.

Alternativ kann der Umlenkwinkel auch -30° bis -70°, bevorzugt von -40° bis -60° und besonders bevorzugt von -45° bis -55° betragen.

Die Anordnung einer Umlenkfläche im beanspruchten Winkelbereich hat den Vorteil, dass in Abhängigkeit vom verwendeten Schüttgut und der geforderten Flussrate die Menge an zugeführtem Schüttgut einstellbar ist.

Insbesondere ist der Umlenkwinkel einstellbar, was vorteilhaft eine Einstellbarkeit des Umlenkwinkels in Abhängigkeit der jeweiligen Anforderungen erlaubt.

Ein zusätzlicher Aspekt der vorliegenden Erfindung betrifft ein Verfahren zum Fördern von Schüttgut mit einer Fördereinrichtung wie oben beschrieben. Optional umfasst die Fördereinrichtung einen Mitnehmer wie oben beschrieben. Weiter optional umfasst die Vorrichtung eine Zufuhreinrichtung wie oben beschrieben. Das Verfahren umfasst den Schritt der Förderung des Schüttguts von einem Einlass zu einem Auslass.

Das Verfahren weist die oben beschriebenen Vorteile auf.

Ein weiterer Aspekt der vorliegenden Erfindung betrifft ein Verfahren zum Aufrüsten und/oder Umrüsten einer Fördereinrichtung zur Förderung von Schüttgut. Das Verfahren umfasst den Schritt der Montage zumindest eines Mitnehmers zur Herstellung einer Fördereinrichtung wie oben beschrieben. Insbesondere wird ein Mitnehmer wie oben beschrieben montiert. Das Verfahren umfasst weiterhin optional den Schritt der Montage einer Zufuhreinrichtung wie oben beschrieben.

Dies hat den Vorteil, dass bereits installierte Fördereinrichtungen aufrüstbar und/oder umrüstbar sind zu einer erfindungsgemässen Fördereinrichtung, was kostengünstig ist, da keine Installation einer komplett neuen Fördereinrichtung notwendig wird.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Figur 1:: perspektivische Darstellung einer erfindungsgemässen Fördereinrichtung;
- Figur 2:: Vorderansicht der erfindungsgemässen Fördereinrichtung gemäss Figur 1;
- Figur 3:: vergrösserte Darstellung des Antriebsabschnitts der erfindungsgemässen Fördereinrichtung gemäss Figur 1;
- Figur 4:: Vorderansicht eines Ausschnitts der erfindungsgemässen Fördereinrichtung gemäss Figur 1 umfassend den Antriebsabschnitt;
- Figur 5:: Ausschnitt einer erfindungsgemässen Fördereinrichtung umfassend zwei Mitnehmer in einem geraden Förderrohr;
- Figur 6:: Ausschnitt einer erfindungsgemässen Fördereinrichtung mit zwei Mitnehmern in einem gekrümmten Förderkanal;
- Figur 7:: photographische Darstellung zweier erfindungsgemässer Mitnehmer in Wirkverbindung in einer Förderrinne;
- Figur 8:: perspektivische Darstellung eines erfindungsgemässen Mitnehmers;
- Figur 9:: Seitenansicht des Mitnehmers gemäss Figur 8;
- Figur 10:: schematische Darstellung einer erfindungsgemässen Zufuhreinrichtung mit einem Förderkanal;
- Figur 11:: perspektivische Darstellung eines Teils einer alternativen erfindungsgemässen Fördereinrichtung mit Mitnehmern und Schüttgut;
- Figur 12:: schematische Darstellung einer Fördereinrichtung mit S-förmigem Förderrohr;
- Figur 13a:: eine perspektivische Ansicht einer weiteren Ausführungsform einer erfindungsgemässen Fördereinrichtung mit an einem Antriebskettenpaar angeordneten Mitnehmerbolzen;
- Figur 13b:: eine Draufsicht auf die Fördereinrichtung gemäss Figur 13a;
- Figur 14a:: eine perspektivische Ansicht einer weiteren Ausführungsform einer erfindungsgemässen Fördereinrichtung mit an zwei Antriebskettenpaaren angeordneten Mitnehmerbolzen;
- Figur 14b:: eine Draufsicht auf die Fördereinrichtung gemäss Figur 14a;
- Figur 15a:: eine perspektivische Ansicht einer weiteren Ausführungsform einer erfindungsgemässen Fördereinrichtung mit an einer Antriebskette angeordneten Mitnehmervorsprüngen;
- Figur 15b:: eine Draufsicht auf die Fördereinrichtung gemäss Figur 15a;
- Figur 16a:: eine perspektivische Ansicht einer weiteren Ausführungsform einer erfindungsgemässen Fördereinrichtung mit an zwei Antriebsketten angeordneten Mitnehmervorsprüngen;
- Figur 16b:: eine Draufsicht auf die Fördereinrichtung gemäss Figur 16a;
- Figur 17a:: eine perspektivische Ansicht einer weiteren Ausführungsform einer erfindungsgemässen Fördereinrichtung mit einer Antriebsschnecke;
- Figur 17b:: eine Draufsicht auf die Fördereinrichtung gemäss Figur 17a;
- Figur 18a:: eine perspektivische Ansicht einer weiteren Ausführungsform einer erfindungsgemässen Fördereinrichtung mit zwei Antriebsschnecken;
- Figur 18b:: eine Draufsicht auf die Fördereinrichtung gemäss Figur 18a;
- Figur 19a:: eine Fördereinrichtung mit einem Viergelenkantrieb zu einem ersten Zeitpunkt;
- Figur 19b:: die Fördereinrichtung gemäss Figur 19a zu einem zweiten Zweitpunkt.

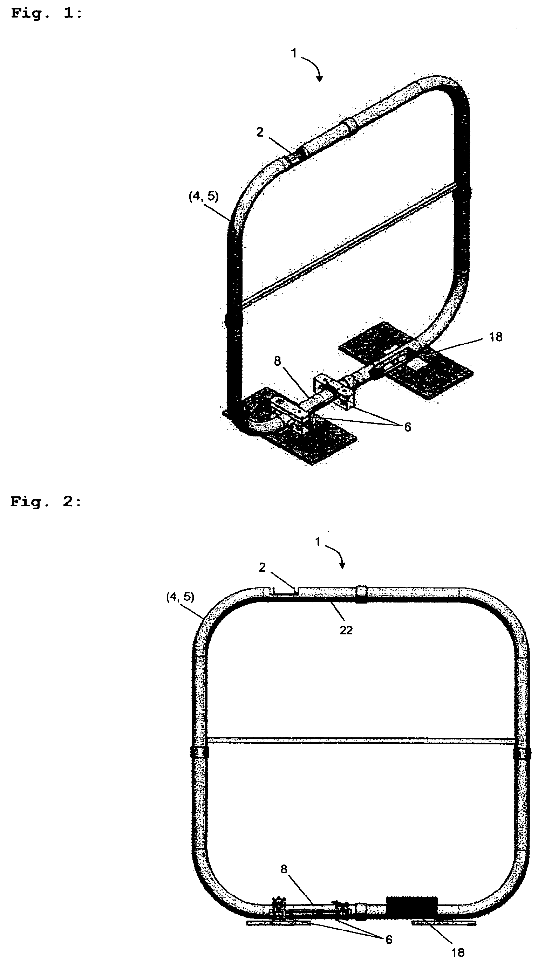

In Figur 1 ist in perspektivischer Darstellung eine erfindungsgemässe Fördereinrichtung 1 zur Förderung von Schüttgut dargestellt. Der Förderkanal 4 ist als Förderrohr 5 ausgebildet, welches beispielsweise aus Stahl oder Kunststoff bestehen kann. Der Förderkanal 4 ist umlaufend geschlossen ausgebildet, so dass im Förderkanal 4 angeordnete Mitnehmer 2 endlos umlaufen können.

In der Fördereinrichtung 1 ist eine Mehrzahl von Mitnehmern 2 angeordnet, die mittels des Antriebs 6 im Antriebsabschnitt 8 angetrieben werden. Die Mitnehmer sind entlang der Förderkanalachse lose im Förderkanal 4 angeordnet.

Schüttgut wird mittels der Zufuhreinrichtung 18 in den Förderkanal 4 gefördert.

In Figur 2 ist in einer Vorderansicht die Fördereinrichtung 1 gemäss Figur 1 dargestellt.

Gleiche Referenzzeichen bezeichnen im Folgenden gleiche Merkmale in den Figuren und werden deshalb nur bei Bedarf erneut erläutert.

In der Darstellung gemäss Figur 2 ist ein Auslass 22 dargestellt. Im Betrieb wird Schüttgut durch die Zufuhreinrichtung 18 in den Förderkanal 4 gefördert. Das im Förderkanal 4 sich befindende Schüttgut wird mittels der angetriebenen Mitnehmer 2 zum Auslass 22 gefördert, wo das Schüttgut aus der Fördereinrichtung 1 beispielsweise in einen hier nicht dargestellten Auffangbehälter fällt.

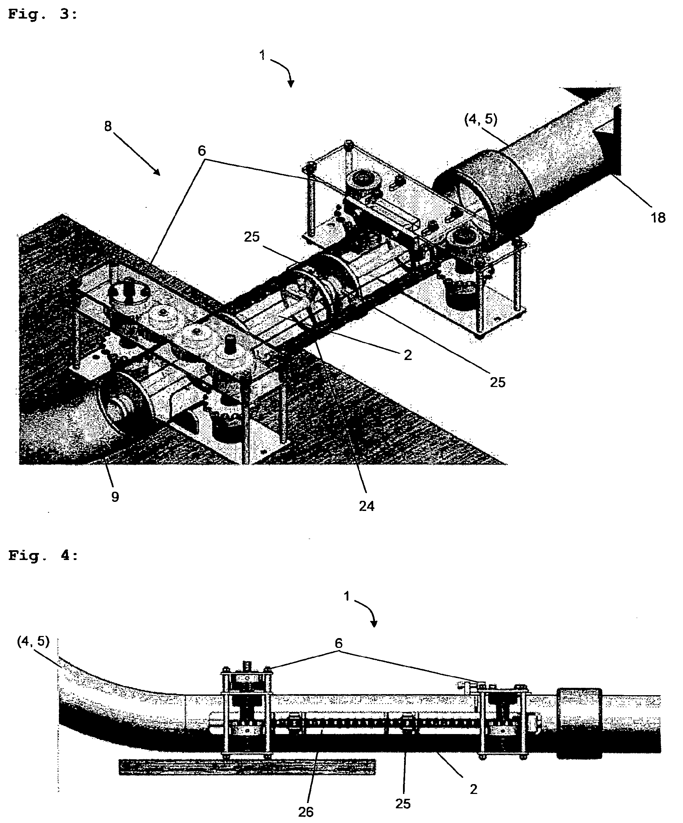

In Figur 3 ist in perspektivischer Darstellung der Bereich umfassend den Antriebsabschnitt 8 der Fördereinrichtung 1 gemäss Figur 1 dargestellt. Das Förderrohr 5 hat eine Innenwand 9, die als Führungseinrichtung entlang der Förderkanalachse für den Mitnehmer 2 wirkt.

Im Antriebsabschnitt 8 wird mittels Antriebsarmen 25 eine Kraft im Wesentlichen parallel zur Förderkanalachse auf die Mitnehmer 2 ausgeübt. Die Antriebsarme 25 werden mittels einer Antriebskette 24 im Antriebsabschnitt 8 im Wesentlichen parallel zur Förderkanalachse bewegt. Die Kraft wird im Wesentlichen in dem der Innenwand 9 des Förderkanals zugewandten Umfangsbereich des Mitnehmers 2 auf den Mitnehmer 2 ausgeübt.

In Figur 4 ist in einer Vorderansicht ein Teil des Ausschnitts der Fördereinrichtung 1 gemäss Figur 3 dargestellt.

Die mittels der Antriebskette 24 angetriebenen Antriebsarme 25 greifen in das Förderrohr 5 durch eine Eingreiföffnung 26 ein. Da eine Zuführung von Schüttgut erst stromabwärts des Antriebsabschnitts mit dem Antrieb 6 erfolgt, ist eine Abdichtung der Eingreiföffnung 26 nicht in jedem Fall notwendig.

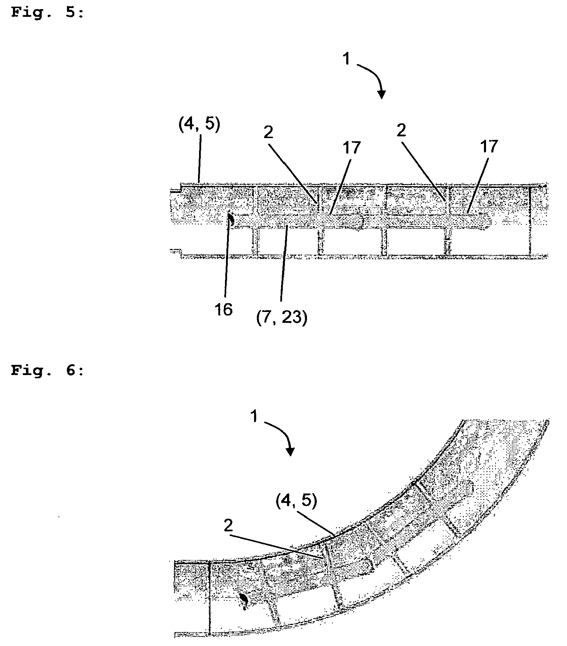

In Figur 5 ist schematisch ein Ausschnitt eines Förderkanals 4, welcher als Förderrohr 5 ausgebildet ist, umfassend zwei Mitnehmer 2 dargestellt. Die Mitnehmer 2 weisen auf der der Förderrichtung zugewandten Seite der Mitnehmer 2 Arme 17 auf, die als Abstandshalter dienen. Auf der der Förderrichtung abgewandten Seite weisen die Mitnehmer 2 Ausnehmungen 16 auf, in die gegebenenfalls ein benachbart angeordneter Mitnehmer 2 mit dem Arm 17 eingreifen kann.

Die Mitnehmer 2 umfassen Streben 23, die vorliegend im Wesentlichen parallel zur Förderkanalachse 7 angeordnet sind.

In Figur 6 ist schematisch ein Ausschnitt einer Fördereinrichtung mit gekrümmtem Förderkanal mit darin angeordneten Mitnehmern 2 dargestellt.

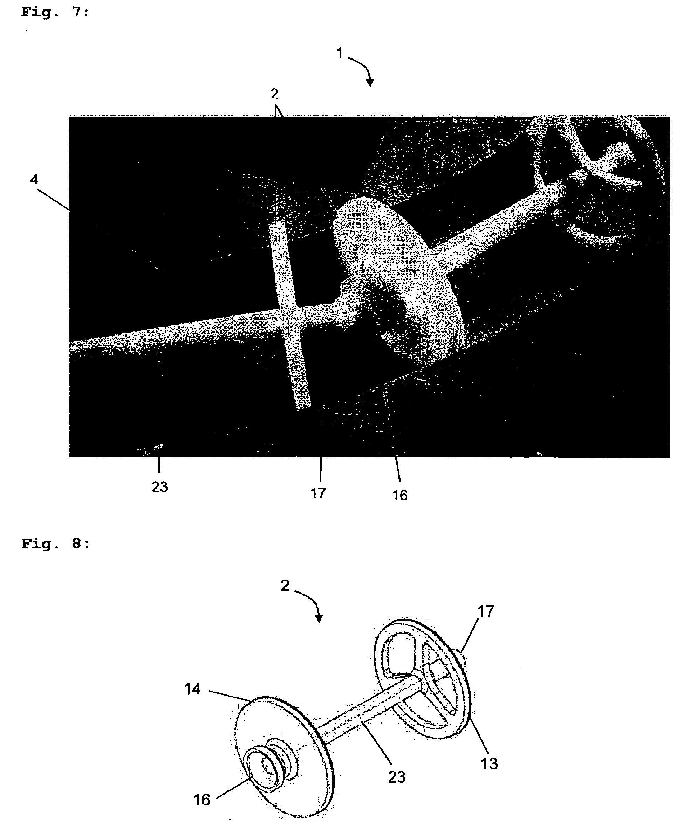

In Figur 7 ist photographisch ein Ausschnitt einer Fördereinrichtung 1 mit einem als Förderrinne ausgebildeten Förderkanal 4 dargestellt, in dem zwei Mitnehmer 2 mit Arm 17 und Ausnehmung 16 dargestellt sind in einem gekrümmten Abschnitt des Förderkanals.

In Figur 8 ist in perspektivischer Darstellung ein erfindungsgemässer Mitnehmer 2 dargestellt.

Der Mitnehmer 2 gemäss Figur 8 weist einen Arm 17 auf, der bei bestimmungsgemässem Gebrauch auf der der Förderrichtung zugewandten Seite in einem Förderkanal angeordnet wird.

Der Mitnehmer 2 weist ein erstes Flächenelement 13 auf, welches für Schüttgut durchlässig ist. Der Mitnehmer 2 weist weiterhin ein zweites Flächenelement 14 auf, welches die hier nicht gezeigte Mitnehmerfläche umfasst. Das erste Flächenelement 13 und das zweite Flächenelement 14 sind mittels einer Strebe 23 voneinander beabstandet angeordnet zur Wirkverbindung der beiden Flächenelemente.

Zudem weist der Mitnehmer 2 auf der der Förderrichtung abgewandten Seite des zweiten Flächenelements 14 eine Ausnehmung 16 auf, in die ein Arm 17 eines benachbart angeordneten Mitnehmers eingreifen kann.

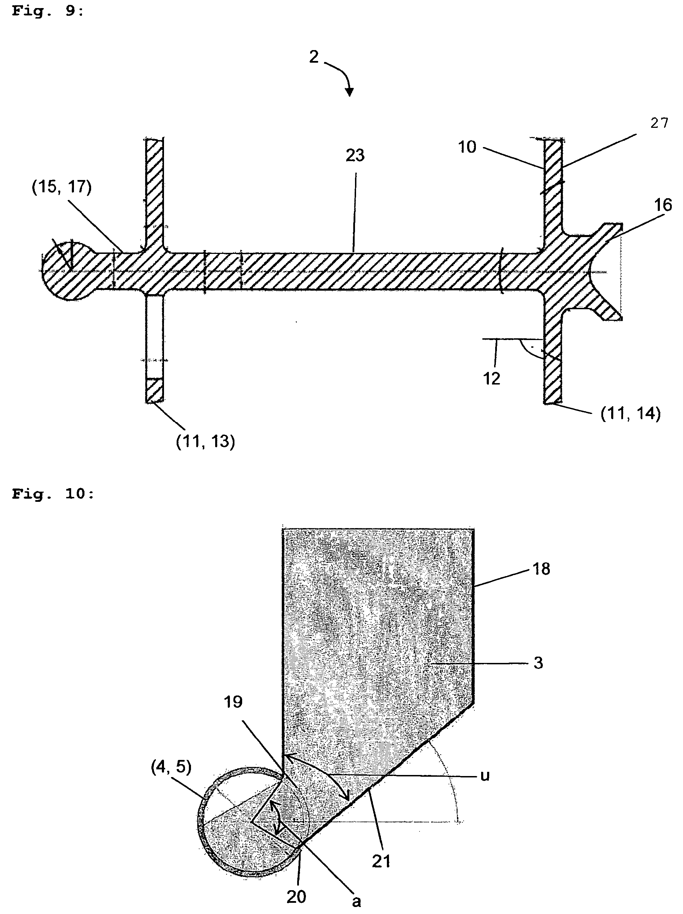

In Figur 9 ist in einer Seitenansicht der erfindungsgemässe Mitnehmer 2 gemäss Figur 8 dargestellt.

Der Mitnehmer 2 weist einen Abstandshalter 15 auf, der als Arm 17 ausgebildet ist. Der Arm 17 ist am vom Mitnehmer 2 abgewandten Ende kugelförmig ausgebildet. Auf der der Förderrichtung abgewandten Seite weist der Mitnehmer 2 eine Ausnehmung 16 auf, die abschnittsweise kugelförmig ausgebildet ist, so dass der kugelförmig ausgebildete Abstandshalter 15 in die komplementäre Ausnehmung 16 eines weiteren Mitnehmers eingreifen kann.

Das erste Flächenelement 13 und das zweite Flächenelement 14 sind mittels der Strebe 23 miteinander wirkverbunden, wobei das erste Flächenelement 13 und das zweite Flächenelement 14 als Ausrichtungseinrichtung 11 wirken. Das erste Flächenelement 13 ist durchlässig für Schüttgut.

Das zweite Flächenelement 14 umfasst an einer ersten Seite die Mitnehmerfläche 10 zur Förderung des Schüttguts entlang des Förderkanals und an einer der ersten Seite gegenüberliegenden zweiten Seite eine Antriebsfläche 27. Die Antriebsfläche 27 kann elastisch ausgebildet sein und insbesondere aus Kunststoff oder Gummi bestehen. Alternativ kann die Antriebsfläche 27 jedoch auch aus Stahl bestehen. Auf diese Antriebsfläche 27 kann der Antrieb eine Kraft ausüben, um den Mitnehmer 2 anzutreiben.

Die vom Umfang des ersten Flächenelements 13 und des zweiten Flächenelements 14 umschlossenen Flächen sind bei einer Projektion im Wesentlichen parallel zur mittleren Oberflächensenkrechten 12 im Wesentlichen kongruent zueinander ausgebildet, was zur gewünschten Ausrichtung des Mitnehmers 2 im Förderkanal führt.

In Figur 10 ist eine erfindungsgemässe Zufuhreinrichtung 18 zur Zufuhr von Schüttgut 3 in ein Förderrohr 5 der Fördereinrichtung dargestellt in einer Seitenansicht.

Das Förderrohr 5 weist einen Einlass 19 auf, der einen Winkelbereich a von ca. 90 ° überstreicht. Mittels eines Schiebers 20, der als Drehschieber ausgebildet ist, kann der Winkelbereich a entsprechend den Anforderungen eingestellt werden.

Die Zufuhreinrichtung 18 weist einen Umlenkbereich 21 auf, der mit einem Umlenkwinkel u von ca. 50 ° bezogen auf die Schwerkraftrichtung angeordnet ist.

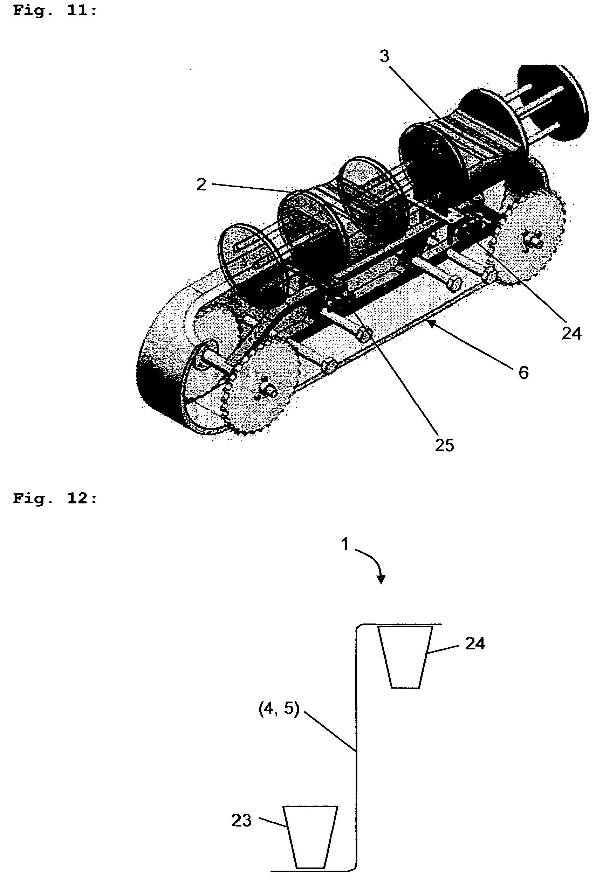

In Figur 11 ist in perspektivischer Darstellung ein Ausschnitt einer alternativen erfindungsgemässen Fördereinrichtung dargestellt. Zur besseren Übersicht wurde hier das Förderrohr ausgeblendet.

In dem Förderrohr ist eine Mehrzahl von Mitnehmern 2 angeordnet, wobei vorliegend drei Mitnehmer 2 sichtbar sind. Mittels einer Antriebskette 24 (nur abschnittsweise dargestellt) und daran angeordneter Antriebsarme 25 ist eine Kraft auf die Mitnehmer 2 im Wesentlichen parallel zur Förderkanalachse ausübbar. Die Mitnehmer 2 weisen keine Abstandshalter auf. Zwischen den Mitnehmern 2 ist Schüttgut 3 angeordnet, was zur vorliegenden gewünschten Beabstandung der Mitnehmer 2 führt.

In Figur 12 ist in schematischer Darstellung eine Seitenansicht einer Fördereinrichtung 1 mit einem Förderrohr 5 dargestellt. Das Förderrohr 5 ist S-förmig ausgebildet. In einem unteren Bereich ist ein Einlassbehälter 23 zur Zuführung von Schüttgut angeordnet, welches mittels nicht dargestellter Mitnehmer zum Auslassbehälter 24 gefördert wird. Der Einlass und der Auslass sind hier nicht dargestellt.

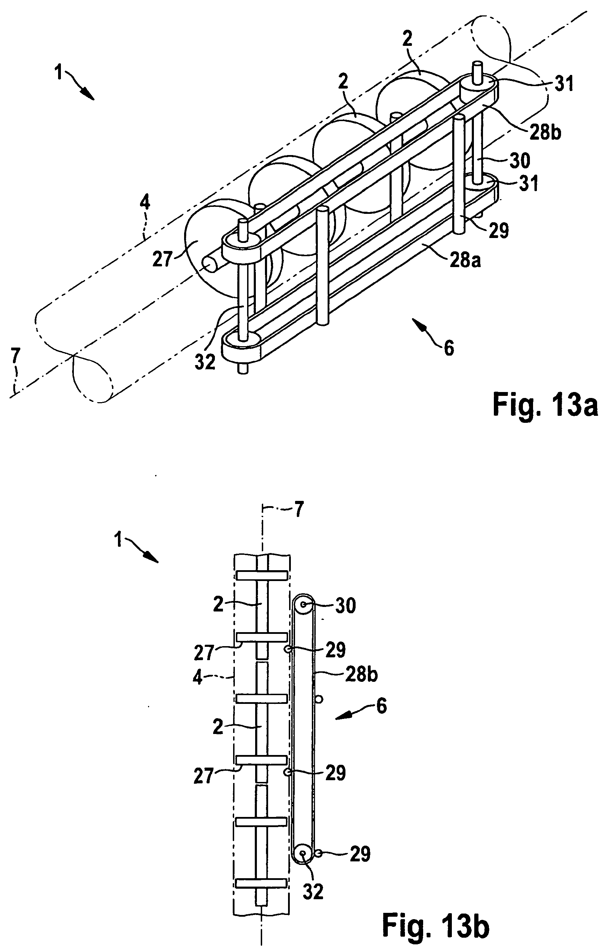

Die Fördereinrichtung 1 gemäss den Figuren 13a und 13b enthält ein Kettengetriebe 6 mit einem Antriebskettenpaar, welches aus einer unteren Antriebskette 28a und einer oberen Antriebskette 28b besteht. An diesen Antriebsketten 28a, 28b sind vier Mitnehmerbolzen 29 befestigt, wobei die jeweils unteren Enden der Mitnehmerbolzen 29 an der unteren Antriebskette 28a befestigt sind und die oberen Enden der Mitnehmerbolzen 29 an der oberen Antriebskette 28b. Auf diese Weise erstrecken sich die Mitnehmerbolzen 29 in einer vertikalen Richtung. Die beiden Antriebsketten 28a, 28b werden mit Hilfe einer Antriebswelle 30 und zweier daran befestigter Kettenräder 31 angetrieben. Am gegenüberliegenden Ende werden die Antriebsketten 28a, 28b mit Hilfe einer Umlenkachse 32 umgelenkt. Denkbar sind auch mehr oder weniger als vier Mitnehmerbolzen 29, die an den Antriebsketten 28a, 28b befestigt sind.

Durch Rotation der Antriebswelle 30 werden die Mitnehmerbolzen 29 entlang der Förderkanalachse 7 bewegt. Hierdurch geraten die Mitnehmerbolzen 29 in Kontakt mit den Antriebsflächen 27 der Mitnehmer 2 und treiben diese somit an.

Der Abstand zweier benachbarter Mitnehmerbolzen 29 ist etwa das 1,02-fache der Ausdehnung der Mitnehmer 2 entlang der Förderkanalachse 7 und damit im Sinne der obigen Definition im Wesentlichen identisch mit dieser Ausdehnung. Hierdurch kann bewerkstelligt werden, dass die Mitnehmer 2 während des Antreibens einander beinahe berühren. Eine Berührung wird jedoch verhindert, um unbeabsichtigte Kollisionen benachbarter Mitnehmer 2 zu verhindern. Zudem ist der Antriebsabschnitt entlang der Förderkanalachse 7 doppelt so lang wie die Mitnehmer 2. Somit befindet sich zu jedem Zeitpunkt mindestens ein Mitnehmer 2 vollständig im Antriebsabschnitt.

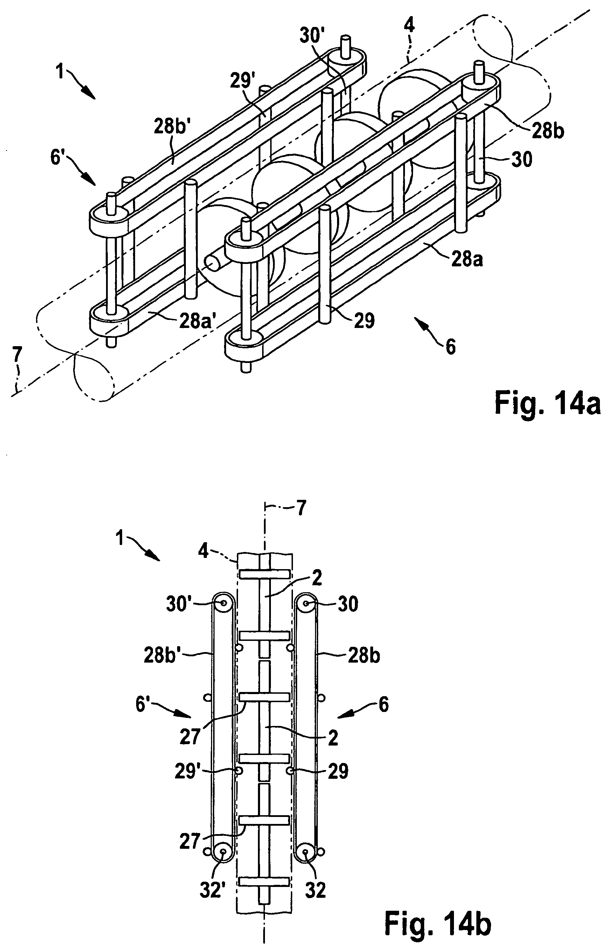

Das in den Figuren 14a und 14b gezeigte Ausführungsbeispiel enthält zwei Kettengetriebe 6 und 6' mit Antriebskettenpaaren 28a, 28b und 28a', 28b', die jeweils vier Mitnehmerbolzen 29 bzw. 29' aufweisen. Die beiden Antriebskettenpaare 28a, 28b und 28a', 28b' sind an gegenüberliegenden Seiten des Förderkanals 4 angeordnet. Um eine synchrone Bewegung und eine vertikale Ausrichtung der Mitnehmerbolzen 29, 29' zu ermöglichen, können die beiden Antriebswellen 30, 30' über ein hier nicht dargestelltes Zahnradgetriebe von einem gemeinsamen Motor angetrieben werden.

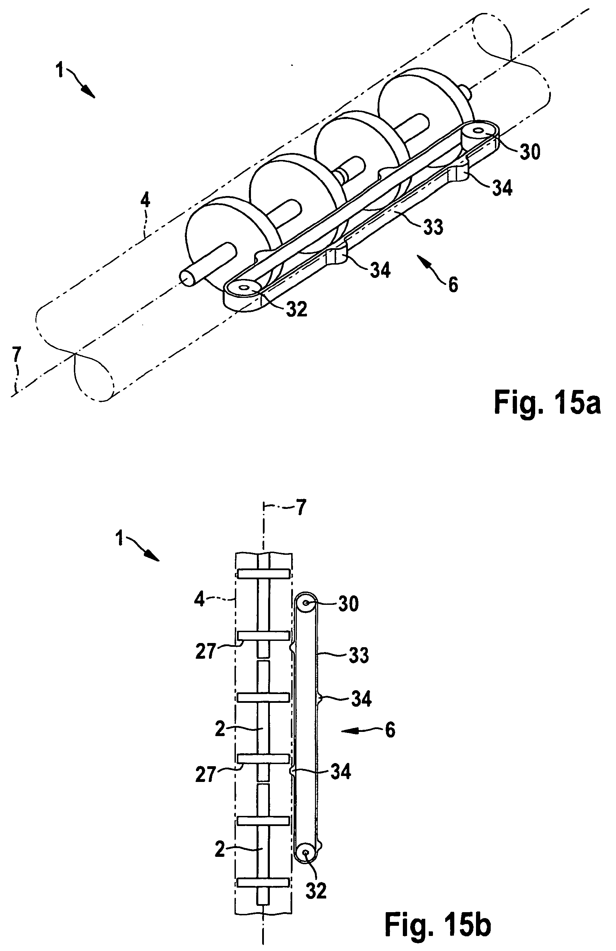

Das Kettengetriebe 6 im Ausführungsbeispiel gemäss den Figuren 15a und 15b enthält eine Antriebskette 33, welches von einer Antriebswelle 30 angetrieben und einer Umlenkachse 32 umgelenkt wird. An der Antriebskette 33 sind vier Mitnehmervorsprünge 34 angeschraubt, mittels deren die Mitnehmer 2 angetrieben werden können. Die Antriebskette 33 ist seitlich vom Förderkanal 4 angeordnet.

Der Abstand zweier benachbarter Mitnehmervorsprünge 34 ist etwa das 1,02-fache der Ausdehnung der Mitnehmer 2 entlang der Förderkanalachse 7 und damit im Sinne der obigen Definition im Wesentlichen identisch mit dieser Ausdehnung. Hierdurch kann bewerkstelligt werden, dass die Mitnehmer 2 während des Antreibens einander beinahe berühren. Zudem ist der Antriebsabschnitt auch in diesem Beispiel entlang der Förderkanalachse 7 doppelt so lang wie die Mitnehmer 2. Somit befindet sich zu jedem Zeitpunkt mindestens ein Mitnehmer 2 vollständig im Antriebsabschnitt.

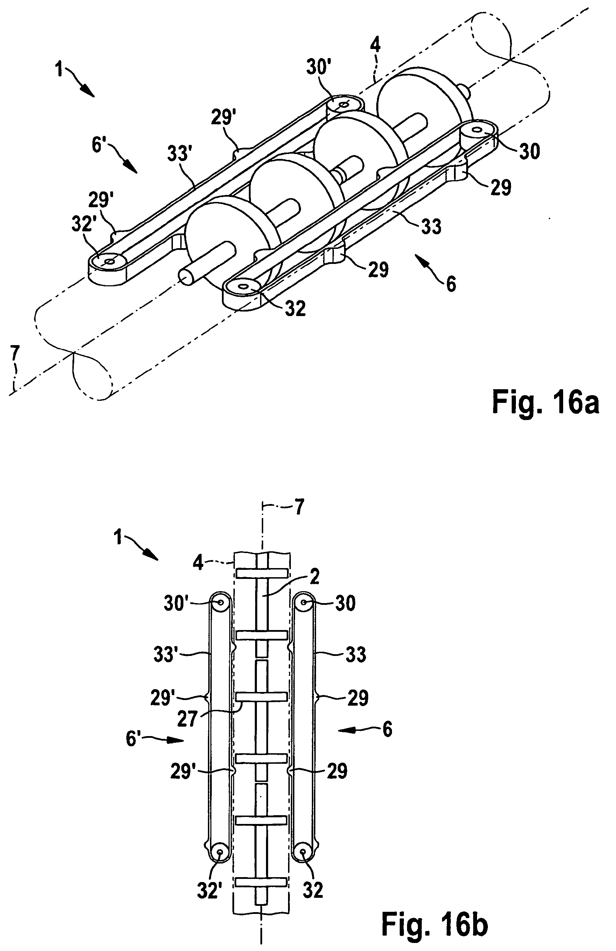

Im Gegensatz zu den Figuren 15a und 15b enthält die Fördereinrichtung 1 gemäss den Figuren 16a und 16b zwei gegenüberliegende Antriebsketten 33, 33' mit jeweiligen Antriebswellen 30 bzw. 30' und Umlenkachsen 32 bzw. 32' sowie Mitnehmervorsprüngen 34 bzw. 34'. Auch in diesem Ausführungsbeispiel kann die Synchronisation der beiden Antriebswellen 30 und 30' mit Hilfe eines hier nicht dargestellten Zahnradgetriebes erfolgen.

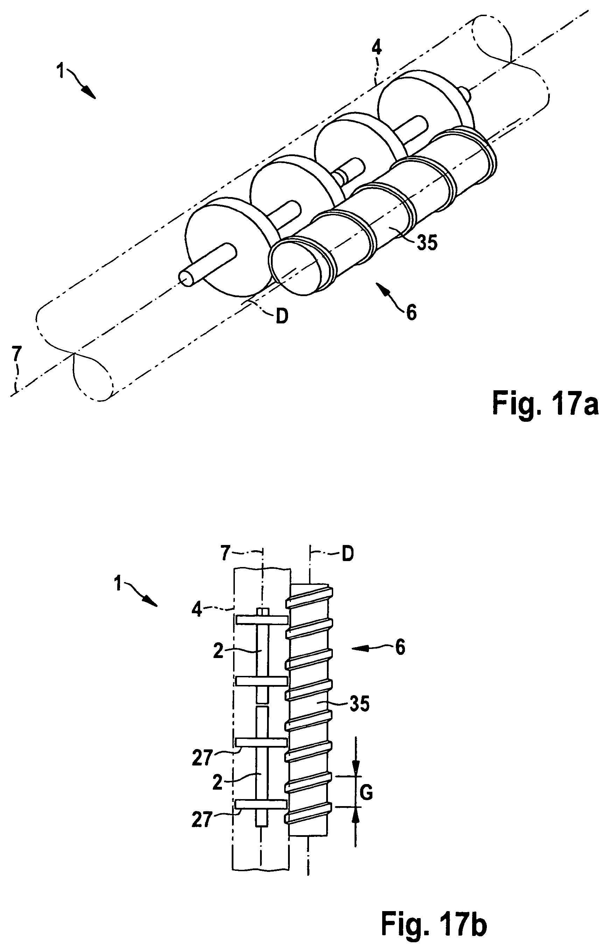

In den Figuren 17a und 17b dargestellten Ausführungsbeispiel ist der Antrieb als Schneckengetriebe 6 mit einer drehbaren Antriebsschnecke 35 ausgebildet, deren Drehachse D parallel zur Förderkanalachse 7 verläuft. In diesem Ausführungsbeispiel erfolgt der Antrieb der Mitnehmer 2 durch Drehung der Antriebsschnecke 35 um ihre Drehachse D.

Die Ausdehnung der Mitnehmer 2 entlang der Förderkanalachse 7 ist etwa das 3,9-fache der Ganghöhe G der Antriebsschnecke 35. Hierdurch kann bewerkstelligt werden, dass die Mitnehmer 2 während des Antreibens einander beinahe berühren.

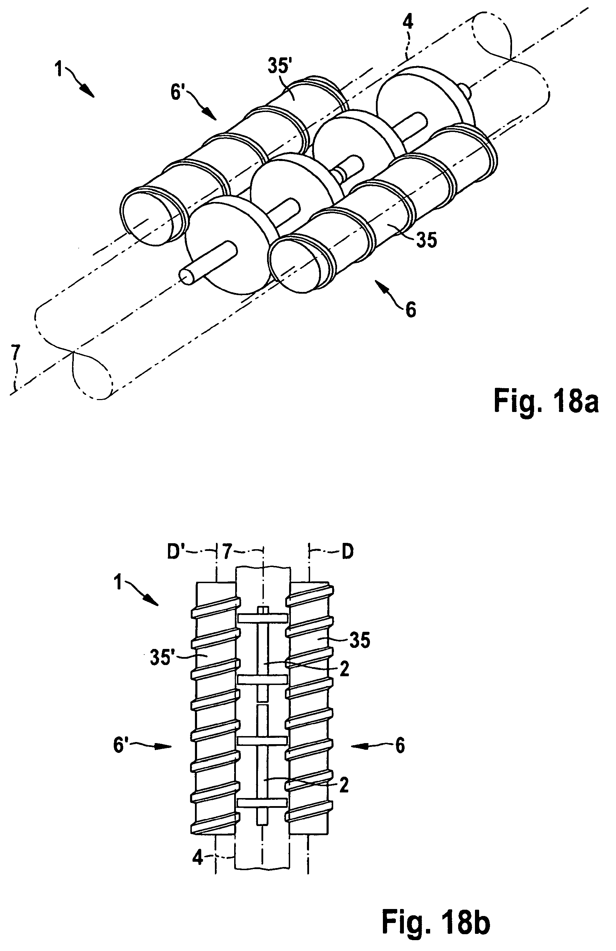

Das in den Figuren 18a und 18b dargestellte Ausführungsbeispiel zeigt zwei Antriebsschnecken 35, 35' mit jeweiligen Drehachsen D, D', welche parallel zur Förderkanalachse 7 verlaufen. Auch hier kann die Synchronisation der beiden Antriebsschnecken 35, 35'über ein hier nicht dargestelltes Zahnradgetriebe erfolgen.

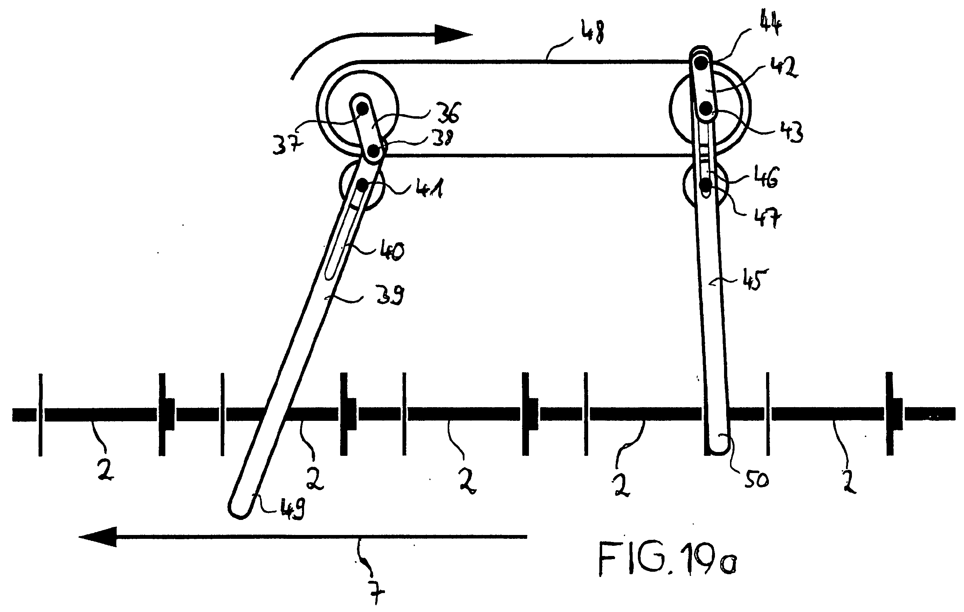

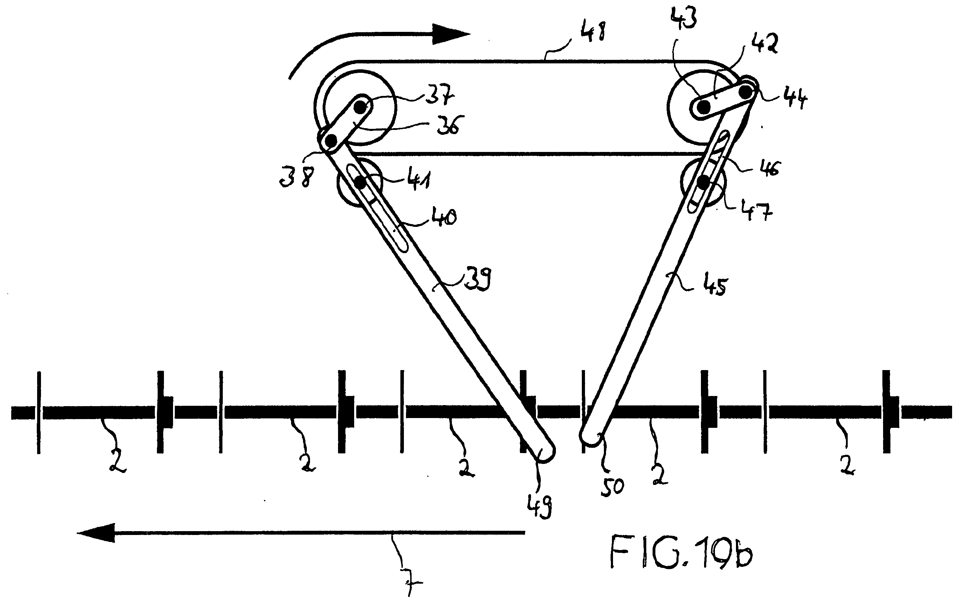

In den Figuren 19a und 19b ist ein als Viergelenkantrieb ausgebildeter Antrieb 4 dargestellt. Ein erstes Ende eines ersten Hebels 36 ist an einer ersten Antriebswelle 37 befestigt, während ein zweites Ende des ersten Hebels 36 über ein Gelenk 38 mit einem ersten Ende eines zweiten Hebels 39 drehbar verbunden ist. Der zweite Hebel 39 enthält einen Schlitz 40, in den ein Stift 41 eingreift, wodurch eine Führung des zweiten Hebels 39 ermöglicht wird. Des Weiteren ist ein erstes Ende eines dritten Hebels 42 an einer zweiten Antriebswelle 43 befestigt, während ein zweites Ende des dritten Hebels 42 über ein Gelenk 44 mit einem ersten Ende eines vierten Hebels 45 drehbar verbunden ist. Der vierte Hebel 45 enthält einen Schlitz 46, in den ein Stift 47 eingreift, wodurch eine Führung des vierten Hebels 45 ermöglicht wird. Die erste Antriebswelle 37 und die zweite Antriebswelle 43 werden durch einen gemeinsamen Antriebsriemen 48 angetrieben, wodurch eine Synchronisation der Antriebswellen 37, 43 erreicht wird.

Die Figuren 19a und 19b zeigen den Antrieb 6 zu zwei verschiedenen Zeitpunkten. Der Antrieb 6 ist derart ausgebildet und angeordnet, dass abschnittsweise mittels eines zweiten Endes 49 des zweiten Hebels 39 und eines zweiten Endes 50 des vierten Hebels 45 eine Kraft parallel zur Förderkanalachse 7 auf Mitnehmer 2 ausübbar ist, wenn sich der Antrieb 6 durch Bewegung des Antriebsriemens 48 bewegt. Zudem ist der Antrieb 6 derart ausgebildet und angeordnet, dass das zweite Ende 49 des zweiten Hebels 39 so lange eine Kraft auf einen ersten Mitnehmer 2 ausübt, bis das zweite Ende 50 des vierten Hebels 45 beginnt, eine Kraft auf einen zweiten Mitnehmer 2 auszuüben und umgekehrt. Der Antriebsabschnitt hat in diesem Ausführungsbeispiel die Länge eines Mitnehmers 2.

Alternativ zu dem in den Figuren 19a und 19b dargestellten Ausführungsbeispiel kann die Bewegung von Hebeln auch über mindestens eine Kulisse, bevorzugt über mindestens zwei Kulissen, gesteuert werden, die entweder die Hebel mit senkrecht beweglichen Mitnehmerbolzen direkt über den Mitnehmern führt oder indirekt im Antrieb platziert ist.

## Patentansprüche

1. Fördereinrichtung (1) umfassend einen Förderkanal (4), insbesondere ein Förderrohr (5), zumindest einen im Förderkanal (4) angeordneten Mitnehmer (2), insbesondere zumindest zwei Mitnehmer (2), und zumindest einen Antrieb (6) zum Antreiben des zumindest einen Mitnehmers (2) zur Förderung von Schüttgut (3) entlang einer Förderkanalachse (7), wobei der zumindest eine Mitnehmer zumindest abschnittsweise entlang der Förderkanalachse (7) lose im Förderkanal (4) angeordnet ist und eine Kraftübertragung zwischen zwei im Förderkanal (4) parallel zur Förderkanalachse (7) benachbart angeordneten Mitnehmern (2) mittels direkten Kontakts zwischen den Mitnehmern (2) und/oder durch zwischen den Mitnehmern (2) im Förderkanal angeordnetes Schüttgut erzielbar ist,
**dadurch gekennzeichnet, dass**
der Antrieb (6) zumindest in einem Antriebsabschnitt (8) in den Förderkanal (4) eingreift zur Ausübung einer Kraft im Wesentlichen parallel zur Förderkanalachse (7) auf einen im Antriebsabschnitt (8) angeordneten Mitnehmer (2).

2. Fördereinrichtung (1) nach Anspruch 1, **dadurch gekennzeichnet, dass** der Förderkanal (4) als Führungseinrichtung entlang der Förderkanalachse (7) für den Mitnehmer (2) ausgebildet ist.

3. Fördereinrichtung (1) nach Anspruch 1 oder 2, **dadurch gekennzeichnet, dass** der Antrieb (6) derart ausgebildet ist, dass zumindest abschnittsweise eine Kraft im Wesentlichen parallel zur Förderkanalachse (7) durch den Antrieb (6) direkt auf den Mitnehmer (2) ausübbar ist.

4. Fördereinrichtung (1) nach einem der Ansprüche 1 bis 3,
**dadurch gekennzeichnet, dass** der Antrieb (6) aus der Liste der folgenden Antriebsarten oder beliebigen Kombinationen daraus auswählbar oder ausgewählt ist: Kettengetriebe, Riementriebe, Koppelgetriebe, Zahnradgetriebe, Schneckengetriebe.

5. Fördereinrichtung (1) nach einem der Ansprüche 3 und 4,
**dadurch gekennzeichnet, dass**
der Antrieb (6) mindestens einen Mitnehmerbolzen (29, 29') aufweist, mittels dessen zumindest abschnittsweise eine Kraft im Wesentlichen parallel zur Förderkanalachse (7) direkt auf den Mitnehmer (2) ausübbar ist.

6. Fördereinrichtung (1) nach Anspruch 5,
**dadurch gekennzeichnet, dass**
der Antrieb als Kettengetriebe (6) ausgebildet ist und mindestens ein Antriebskettenpaar (28a, 28b; 28a', 28b') aufweist, wobei jedes von zwei gegenüberliegenden Enden des Mitnehmerbolzens (29, 29') an jeweils einer Antriebskette (28a, 28b; 28a', 28b') des Antriebskettenpaares (28a, 28b; 28a', 28b') befestigt ist.

7. Fördereinrichtung (1) nach einem der Ansprüche 3 bis 6,
**dadurch gekennzeichnet, dass**
der Antrieb als Kettengetriebe (6) ausgebildet ist und mindestens eine Antriebskette (33, 33') aufweist, die mindestens einen Mitnehmervorsprung (34, 34') aufweist, mittels dessen zumindest abschnittsweise eine Kraft im Wesentlichen parallel zur Förderkanalachse (7) direkt auf den Mitnehmer (2) ausübbar ist.

8. Fördereinrichtung (1) nach einem der Ansprüche 3 bis 7,
**dadurch gekennzeichnet, dass**
der Antrieb als Schneckengetriebe (6) ausgebildet ist und mindestens eine drehbare Antriebsschnecke (35, 35') aufweist, mittels deren Drehbewegung zumindest abschnittsweise eine Kraft im Wesentlichen parallel zur Förderkanalachse (7) direkt auf den Mitnehmer (2) ausübbar ist.

9. Mitnehmer (2) zur Förderung von Schüttgut (3) in einer Fördereinrichtung (1) gemäss einem der vorstehenden Ansprüche, umfassend eine Mitnehmerfläche (10), wobei der Mitnehmer (2) eine Ausrichtungseinrichtung (11) umfasst zur zumindest abschnittsweisen Ausrichtung der mittleren Oberflächensenkrechten (12) der Mitnehmerfläche (10) im Wesentlichen parallel zur Förderkanalachse (7),
**dadurch gekennzeichnet, dass**
die Ausrichtungseinrichtung (11) als zumindest ein erstes Flächenelement (13) und ein zweites Flächenelement (14) ausgebildet ist, die voneinander im Wesentlichen parallel zur Förderkanalachse (7) beabstandet und miteinander wirkverbunden angeordnet sind, wobei die mittleren Oberflächensenkrechten (12) der Flächenelemente im Wesentlichen parallel zur Förderkanalachse (7) angeordnet sind.

10. Mitnehmer (2) nach Anspruch 9, **dadurch gekennzeichnet, dass** bei Ausrichtung der mittleren Oberflächensenkrechten (12) der Mitnehmerfläche (10) im Wesentlichen parallel zur Förderkanalachse (7) die Mitnehmerfläche (10) den mittleren Förderkanalquerschnitt zu kleiner 100 % abdeckt, bevorzugt im Bereich von 50 % bis 99,9 % und besonders bevorzugt von 80 bis 99,9 %.

11. Mitnehmer (2) nach einem der Ansprüche 9 und 10, **dadurch gekennzeichnet, dass** das der Förderrichtung des Schüttguts (3) zugewandte erste Flächenelement (13) für das Schüttgut (3) durchlässig ist, wobei insbesondere das zweite Flächenelement (14) die Mitnehmerfläche (10) umfasst.

12. Mitnehmer (2) nach einem der Ansprüche 9 bis 11, **dadurch gekennzeichnet, dass** der Mitnehmer (2) auf der der Förderrichtung zugewandten und/oder abgewandten Seite einen Abstandshalter (15) aufweist, insbesondere einen im Wesentlichen parallel zur Förderkanalachse (7) angeordneten Arm (17), der insbesondere am vom Mitnehmer (2) abgewandten Ende kugelförmig oder kalottenförmig ausgebildet ist.

13. Mitnehmer (2) nach Anspruch 12, **dadurch gekennzeichnet, dass** der Mitnehmer (2) auf der der Förderrichtung zugewandten oder abgewandten Seite eine Ausnehmung (16) aufweist, die derart ausgebildet ist, dass der Abstandshalter (15) in die Ausnehmung (16) eingreifen kann, wobei die Ausnehmung (16) insbesondere trichterförmig ausgebildet ist, und wobei die Ausnehmung (16) bevorzugt zumindest abschnittsweise kugelförmig und/oder zumindest abschnittsweise parabelförmig ausgebildet ist.

14. Mitnehmer (2) nach einem der Ansprüche 9 bis 13, **dadurch gekennzeichnet, dass** der Mitnehmer (2) mindestens eine Antriebsfläche (27) aufweist, auf die durch den Antrieb (6) eine Kraft im Wesentlichen parallel zur Förderkanalachse (7) direkt auf den Mitnehmer (2) ausübbar ist.

15. Verfahren zum Fördern von Schüttgut (3) mit einer Fördereinrichtung (1) gemäss einem der Ansprüche 1 bis 8, optional mit einem Mitnehmer (2) gemäss einem der Ansprüche 9 bis 14, weiter optional mit einer Zufuhreinrichtung (18), umfassend den Schritt der Förderung des Schüttguts (3) von einem Einlass (19) zu einem Auslass (22).

16. Verfahren zum Aufrüsten und/oder Umrüsten einer Fördereinrichtung (1) zur Förderung von Schüttgut (3), umfassend den Schritt der Montage zumindest eines Mitnehmers (2), insbesondere eines Mitnehmer (2) gemäss einem der Ansprüche 9 bis 14, zur Herstellung einer Fördereinrichtung (1) gemäss einem der Ansprüche 1 bis 8 und optional den Schritt der Montage einer Zufuhreinrichtung (18).

## Claims

1. A conveying device (1) comprising a conveying channel (4), in particular a conveying pipe (5), at least one carrier (2) arranged in the conveying channel (4), in particular at least two carriers (2), and at least one drive (6) for driving the at least one carrier (2) for conveying bulk goods (3) along a conveying channel axis (7), wherein the at least one carrier is loosely arranged in the conveying channel (4) at least in some sections along the conveying channel axis (7) and a force transmission between two carriers (2) adjacently arranged in the conveying channel (4) parallel with respect to the conveying channel axis (7) can be achieved by a direct contact between the carriers (2) and/or by bulk goods arranged between the carriers (2) in the conveying channel,
**characterized in that**
the drive (6) reaches into the conveying channel (4) at least in a drive section (8) for exerting a force substantially parallel with respect to the conveying channel axis (7) on a carrier (2) arranged in the drive section (8).

2. The conveying device (1) according to claim 1, **characterized in that** the conveying channel (4) is formed as a guide means along the conveying channel axis (7) for the carrier (2).

3. The conveying device (1) according to claim 1 or 2, **characterized in that** the drive (6) is configured such that at least in some sections a force can be exerted by the drive (6) directly on the carrier (2) substantially parallel with respect to the conveying channel axis (7).

4. The conveying device (1) according to any of claims 1 to 3, **characterized in that** the drive (6) can be selected or is selected from the list of the following kinds of drives or any combinations thereof: chain drive, belt drive, coupler mechanism, gear drive, worm drive.

5. The conveying device (1) according to any of claims 3 and 4, **characterized in that** the drive (6) comprises at least one carrier bolt (29, 29') by means of which a force can be exerted at least in some sections directly on the carrier (2) substantially parallel with respect to the conveying channel axis (7).

6. The conveying device (1) according to claim 5, **characterized in that** the drive is configured as a chain drive (6) and comprises at least one drive chain pair (28a, 28b; 28a', 28b'), wherein each of two opposite ends of the carrier bolt (29, 29') is attached to a respective drive chain (28a, 28b; 28a', 28b') of the drive chain pair (28a, 28b; 28a', 28b').

7. The conveying device (1) according to any of claims 3 to 6, **characterized in that** the drive is configured as a chain drive (6) and comprises at least one drive chain (33, 33') having at least one carrier projection (34, 34') by means of which a force can be exerted at least in some sections directly on the carrier (2) substantially parallel with respect to the conveying channel axis (7).

8. The conveying device (1) according to any of claims 3 to 7, **characterized in that** the drive is configured as a worm drive (6) and comprises at least one rotary drive worm (35, 35') by the rotational movement of which a force can be exerted at least in some sections directly on the carrier (2) substantially parallel with respect to the conveying channel axis (7).

9. A carrier (2) for conveying bulk goods (3) in a conveying device (1) according to any of the preceding claims, comprising a carrier surface (10), wherein the carrier (2) comprises an alignment means (11) for aligning the mean surface perpendicular (12) of the carrier surface (10) at least in some sections substantially parallel with respect to the conveying channel axis (7),
**characterized in that**
the alignment means (11) is configured at least as a first surface element (13) and a second surface element (14) which are spaced from each other substantially parallel with respect to the conveying channel axis (7) and which are arranged so as to be operatively connected to each other, wherein the mean surface perpendiculars (12) of the surface elements are arranged substantially parallel with respect to the conveying channel axis (7).

10. The carrier (2) according to claim 9, **characterized in that** when aligning the mean surface perpendicular (12) of the carrier surface (10) substantially parallel with respect to the conveying channel axis (7), the carrier surface (10) covers the mean conveying channel cross-section to an extent of less than 100%, preferably in the range of 50% to 99.9% and particularly preferably of 80% to 99.9%.

11. The carrier (2) according to any of claims 9 and 10, **characterized in that** the first surface element (13) facing the conveying direction of the bulk goods (3) lets the bulk goods (3) go through, wherein in particular the second surface element (14) comprises the carrier surface (10).

12. The carrier (2) according to any of claims 9 to 11, **characterized in that** at the side facing and/or facing away from the conveying direction, the carrier (2) comprises a spacer (15), in particular an arm (17) arranged substantially parallel with respect to the conveying channel axis (7), which is in particular ball-shaped or dome-shaped at the end facing away from the carrier (2).

13. The carrier (2) according to claim 12, **characterized in that** at the side facing or facing away from the conveying direction, the carrier (2) comprises a recess (16) which is formed such that the spacer (15) can engage with the recess (16), wherein the recess (16) is in particular funnel-shaped and wherein the recess (16) is preferably at least in sections ball-shaped and/or at least in sections parabolic.

14. The carrier (2) according to any of claims 9 to 13, **characterized in that** the carrier (2) comprises at least one drive surface (27) on which a force can be exerted by the drive (6) directly on the carrier (2) substantially parallel with respect to the conveying channel axis (7).

15. A method for conveying bulk goods (3) by using a conveying device (1) according to any of claims 1 to 8, optionally with a carrier (2) according to any of claims 9 to 14, further optionally with a feeding device (18), comprising the step of conveying the bulk goods (3) from an inlet (19) to an outlet (22).

16. A method for upgrading and/or converting or refitting a conveying device (1) for conveying bulk goods (3), comprising the step of mounting at least one carrier (2), in particular a carrier (2) according to any of claims 9 to 14, for building a conveying device (1) according to any of claims 1 to 8, and optionally the step of mounting a feeding device (18).

## Revendications

1. Dispositif de transport (1), comprenant un canal de transport (4), en particulier une conduite de transport (5), au moins un entraîneur (2) disposé dans le canal de transport (4), en particulier au moins deux entraîneurs (2), et au moins un entraînement (6) destiné à entraîner ledit au moins un entraîneur (2) à transporter une matière en vrac (3) le long d'un axe (7) de canal de transport, ledit au moins un entraîneur étant au moins partiellement disposé de manière non fixe dans le canal de transport (4) le long de l'axe (7) de canal de transport et une transmission de force entre deux entraîneurs (2) contigus disposés dans le canal de transport (4) parallèlement à l'axe (7) de canal de transport pouvant être obtenue au moyen de contacts directs entre les entraîneurs (2) et/ou par une matière en vrac disposée entre les entraîneurs (2) dans le canal de transport,
**caractérisé**
**en ce qu'**au moins dans un segment d'entraînement (8), l'entraînement (6) s'engage dans le canal de transport (4) pour exercer une force sensiblement parallèlement à l'axe (7) de canal de transport sur un entraîneur (2) disposé dans le segment d'entraînement (8).

2. Dispositif de transport (1) selon la revendication 1, **caractérisé en ce que** le canal de transport (4) est réalisé comme dispositif de guidage pour l'entraîneur (2) le long de l'axe (7) de canal de transport.

3. Dispositif de transport (1) selon la revendication 1 ou la revendication 2, **caractérisé en ce que** l'entraînement (6) est réalisé de telle manière qu'une force peut s'exercer au moins partiellement par l'entraînement (6) directement sur l'entraîneur (2), sensiblement parallèlement à l'axe (7) de canal de transport.

4. Dispositif de transport (1) selon l'une des revendications 1 à 3, **caractérisé en ce que** l'entraînement (6) peut être ou est sélectionné dans le groupe constitué des types d'entraînements suivants ou de combinaisons quelconques de ceux-ci : transmission par chaîne, transmission par courroie, engrenage couplé, engrenage à roues dentées, transmission à vis sans fin.

5. Dispositif de transport (1) selon la revendication 3 ou la revendication 4, **caractérisé en ce que** l'entraînement (6) comporte au moins un axe d'entraîneur (29, 29') au moyen duquel une force peut être exercée au moins partiellement directement sur l'entraîneur (2), sensiblement parallèlement à l'axe (7) de canal de transport.

6. Dispositif de transport (1) selon la revendication 5, **caractérisé en ce que** l'entraînement est réalisé comme transmission par chaîne (6) et comporte au moins une paire de chaînes de transmission (28a, 28b ; 28a', 28b'), chacune des deux extrémités opposées de l'axe d'entraîneur (29, 29') étant fixée à une chaîne de transmission (28a, 28b ; 28a' , 28b') de la paire de chaînes de transmission (28a, 28b ; 28a', 28b').

7. Dispositif de transport (1) selon l'une des revendications 3 à 6, **caractérisé en ce que** l'entraînement est réalisé comme transmission par chaîne (6) et comporte au moins une chaîne de transmission (33, 33'), laquelle présente au moins une saillie d'entraîneur (34, 34') au moyen de laquelle au moins partiellement une force peut s'exercer au moins partiellement directement sur l'entraîneur (2), sensiblement parallèlement à l'axe (7) de canal de transport.

8. Dispositif de transport (1) selon l'une des revendications 3 à 7, **caractérisé en ce que** l'entraînement est réalisé comme transmission à vis sans fin (6) et comporte au moins une vis d'entraînement rotative (35, 35'), dont la rotation permet à une force de s'exercer au moins partiellement directement sur l'entraîneur (2), sensiblement parallèlement à l'axe (7) de canal de transport.

9. Entraîneur (2) pour le transport de matière en vrac (3) dans un dispositif de transport (1) selon l'une des revendications précédentes, comprenant une surface d'entraîneur (10), ledit entraîneur (2) comprenant un dispositif d'alignement (11) pour l'alignement au moins partiel de la perpendiculaire médiane (12) à la surface d'entraîneur (10) sensiblement parallèlement à l'axe (7) de canal de transport,
**caractérisé**
**en ce que** le dispositif d'alignement (11) est réalisé sous forme d'au moins un premier élément de surface (13) et d'une deuxième élément de surface (14), espacés l'un de l'autre sensiblement parallèlement à l'axe (7) de canal de transport et en liaison active entre eux, les perpendiculaires médianes (12) à la surface des éléments de surface étant sensiblement parallèles à l'axe (7) de canal de transport.

10. Entraîneur (2) selon la revendication 9, **caractérisé en ce que** lors de l'alignement de la perpendiculaire médiane (12) à la surface d'entraîneur (10) sensiblement parallèlement à l'axe (7) de canal de transport, la surface d'entraîneur (10) recouvre la section moyenne du canal de transport à moins de 100 %, préférentiellement entre 50 % et 99,9 %, et tout particulièrement entre 80 et 99,9 %.

11. Entraîneur (2) selon la revendication 9 ou la revendication 10, **caractérisé en ce que** le premier élément de surface (13) orienté dans la direction de transport de la matière en vrac (3) est perméable à la matière en vrac (3), le deuxième élément de surface (14) comprenant notamment la surface d'entraîneur (10).

12. Entraîneur (2) selon l'une des revendications 9 à 11, **caractérisé en ce que** ledit entraîneur (2) présente un espaceur (15) sur le côté orienté dans la direction de transport et/ou opposé à celle-ci, en particulier un bras (17) sensiblement parallèle à l'axe (7) de canal de transport, lequel est en particulier réalisé en forme de sphère ou de calotte à l'extrémité éloignée de l'entraîneur (2).

13. Entraîneur (2) selon la revendication 12, **caractérisé en ce que** ledit entraîneur (2) présente un évidement (16) sur le côté orienté dans la direction de transport ou opposé à celle-ci, lequel est prévu de manière que l'espaceur (15) puisse s'engager dans l'évidement (16), ledit évidement (16) étant en particulier réalisé en forme d'entonnoir, et ledit évidement (16) étant préférentiellement réalisé au moins partiellement en forme de sphère et/ou au moins partiellement en forme de parabole.

14. Entraîneur (2) selon l'une des revendications 9 à 13, **caractérisé en ce que** ledit entraîneur (2) présente au moins une surface d'entraînement (27) au moyen de laquelle une force peut être exercée par l'entraînement (6) directement sur l'entraîneur (2), sensiblement parallèlement à l'axe (7) de canal de transport.

15. Procédé de transport de matière en vrac (3) avec un dispositif de transport (1) selon l'une des revendications 1 à 8, facultativement avec un entraîneur (2) selon l'une des revendications 9 à 14, également facultativement avec un dispositif d'amenée (18), comprenant l'étape de transport de la matière en vrac (3) d'une admission (19) à une évacuation (22).

16. Procédé d'équipement et/ou de rééquipement d'un dispositif de transport (1) destiné à transporter une matière en vrac (3), comprenant l'étape de montage d'au moins un entraîneur (2), en particulier d'un entraîneur (2) selon l'une des revendications 9 à 14, pour la réalisation d'un dispositif de transport (1) selon l'une des revendications 1 à 8, et facultativement l'étape de montage d'un dispositif d'amenée (18).
